# EUROPEAN PATENT SPECIFICATION

(11) **EP 3 667 440 B1**
(45) Date of publication and mention of the grant of the patent: **29.06.2022**
(21) Application number: 19214437.6
(22) Date of filing: 09.12.2019
(51) Int. Cl.: F24F 11/64, F24F 110/20, F24F 110/22, F24F 110/70, G05B 13/04, F24F 11/62, G05D 23/19

(54) **ENVIRONMENT CONTROLLER AND METHOD FOR IMPROVING PREDICTIVE MODELS USED FOR CONTROLLING A TEMPERATURE IN AN AREA**
UMGEBUNGSSTEUERUNG UND VERFAHREN ZUR VERBESSERUNG VON PRÄDIKTIVEN MODELLEN ZUR STEUERUNG EINER TEMPERATUR IN EINEM BEREICH
CONTRÔLEUR D'ENVIRONNEMENT ET PROCÉDÉ D'AMÉLIORATION DE MODÈLES PRÉDICTIFS UTILISÉ POUR RÉGLER LA TEMPÉRATURE DANS UNE ZONE

(30) Priority: 11.12.2018 US 201816216425
(43) Date of publication of application: 17.06.2020
(73) Proprietor: Distech Controls Inc., Brossard, QC J4Y 0C4 (CA)
(72) Inventor: GERVAIS, Francois, Lachine, Québec H8S 1Z3 (CA)
(74) Representative: Wittmann, Günther

(56) References cited:
- WO-A1-2015/130786
- US-A1- 2014 277 765
- US-B1- 6 882 992

## Description

### TECHNICAL FIELD

The present disclosure relates to the field of building automation, and more precisely temperature control in an area of a building. More specifically, the present disclosure presents an environment controller and a method for improving predictive models used for controlling the temperature in the area.

### BACKGROUND

Systems for controlling environmental conditions, for example in buildings, are becoming increasingly sophisticated. An environment control system may at once control heating and cooling, monitor air quality, detect hazardous conditions such as fire, carbon monoxide release, intrusion, and the like. Such environment control systems generally include at least one environment controller, which receives measured environmental values, generally from external sensors, and in turn determines set-points or command parameters to be sent to controlled appliances.

The environment controller and the devices under its control (sensors, controlled appliances, etc.) are generally referred to as Environment Control Devices (ECDs). An ECD comprises processing capabilities for processing data received via one or more communication interface and / or generating data transmitted via the one or more communication interface.

Current advances in artificial intelligence, and more specifically in neural networks, can be taken advantage of in the field of environment control systems. For example, a predictive model taking into consideration environmental characteristic values collected by sensors in an area (e.g. a room) of a building can be used for inferring a temperature adjustment value for the area. The predictive model is generated during a training phase using a neural network training engine. The predictive model is used during an operational phase using a neural network inference engine. However, the predictive model generated during the training phase may not be sufficiently adapted to particular characteristics of the area where it is used. Consequently, the inferred temperature adjustment value for the area is not accurate, at least in certain circumstances.

US 2014/0277765 A1 discloses that a computer data processing system may provide control information for controlling how an environmental control system controls an environment within a building. The computer data processing system may receive and store reports from multiple users and/or may receive and store reports at different times from a user. Each report may provide information concerning how the user perceives the comfort level of the user's environment at the time the user supplies the information. The computer data processing system may determine and generate the control information for controlling how the environmental control system controls the environment based on the information concerning how each user perceives the comfort level of the user's environment at the time each user provides the information.

WO 2015/130786 A1 discloses that environmental characteristics of habitable environments (e.g. hotel or motel rooms, spas, resorts, cruise boat cabins, offices, hospitals and/or homes, apartments or residences) are controlled to eliminate, reduce or ameliorate adverse or harmful aspects and introduce, increase or enhance beneficial aspects in order to improve a "wellness" or sense of "wellbeing" provided via the environments.

US 6,882,992 B1 discloses a method and system for implementing a neuro-controller. One example of a neuro-controller is a brain-like stochastic search. Another example is a neuro-controller for controlling a hypersonic aircraft. Using a variety of learning techniques, the method and system provide adaptable control of external devices ( e.g., airplanes, plants, factories, and financial systems).

Therefore, there is a need for an environment controller and a method for improving predictive models used for controlling a temperature in an area.

### SUMMARY

According to a first aspect, the present disclosure relates to a method for improving predictive models used for controlling a temperature in an area. The method comprises storing a first predictive model and a second predictive model in a memory of an environment controller. The method comprises determining, by a processing unit of the environment controller, a plurality of consecutive temperature measurements in the area. The method comprises determining, by the processing unit of the environment controller, a plurality of consecutive humidity level measurements in the area. The method comprises executing, by the processing unit of the environment controller, a neural network inference engine using the first predictive model for inferring a temperature increase value based on inputs. The inputs comprise the plurality of consecutive temperature measurements and the plurality of consecutive humidity level measurements. The method comprises executing, by the processing unit of the environment controller, the neural network inference engine using the second predictive model for inferring a temperature decrease value based on the inputs. The method comprises calculating, by the processing unit of the environment controller, a temperature adjustment value based on the temperature increase value and the temperature decrease value. The method comprises transmitting, by the processing unit of the environment controller, at least one command to at least one controlled appliance for adjusting the temperature in the area according to the temperature adjustment value. The method comprises receiving, by the processing unit of the environment controller, a vote related to the temperature in the area transmitted by a user device. The method comprises determining, by the processing unit of the environment controller, based on the received vote a value of a first reinforcement signal and a value of a second reinforcement signal. The method comprises executing, by the processing unit of the environment controller, a neural network training engine to update the first predictive model based on the inputs, the temperature increase value and the value of the first reinforcement signal. The method comprises executing, by the processing unit of the environment controller, the neural network training engine to update the second predictive model based on the inputs, the temperature decrease value and the value of the second reinforcement signal. The method comprises storing the updated first and second predictive models in the memory of the environment controller.

According to a second aspect, the present disclosure relates to a non-transitory computer program product comprising instructions executable by a processing unit of an environment controller. The execution of the instructions by the processing unit of the environment controller provides for improving predictive models used for controlling a temperature in an area, by implementing the aforementioned method.

According to a third aspect, the present disclosure relates to an environment controller. The environment controller comprises at least one communication interface, memory for storing a first predictive model and a second predictive model, and a processing unit. The processing unit determines a plurality of consecutive temperature measurements in the area. The processing unit determines a plurality of consecutive humidity level measurements in the area. The processing unit executes a neural network inference engine using the first predictive model for inferring a temperature increase value based on inputs. The inputs comprise the plurality of consecutive temperature measurements and the plurality of consecutive humidity level measurements. The processing unit executes the neural network inference engine using the second predictive model for inferring a temperature decrease value based on the inputs. The processing unit calculates a temperature adjustment value based on the temperature increase value and the temperature decrease value. The processing unit transmits, via the at least one communication interface, at least one command to at least one controlled appliance for adjusting the temperature in the area according to the temperature adjustment value. The processing unit receives, via the at least one communication interface, a vote related to the temperature in the area transmitted by a user device. The processing unit determines based on the received vote a value of a first reinforcement signal and a value of a second reinforcement signal. The processing unit executes a neural network training engine to update the first predictive model based on the inputs, the temperature increase value and the value of the first reinforcement signal. The processing unit executes the neural network training engine to update the second predictive model based on the inputs, the temperature decrease value and the value of the second reinforcement signal. The processing unit stores the updated first and second predictive models in the memory.

In a particular aspect, the area is located in a building.

### BRIEF DESCRIPTION OF THE DRAWINGS

Embodiments of the disclosure will be described by way of example only with reference to the accompanying drawings, in which:
Figures 1 and 2 illustrate an environment control system comprising an environment controller capable of improving predictive models used for controlling a temperature in an area;
Figures 3A and 3B illustrate a user interface for voting for a temperature adjustment in an area;
Figures 4A, 4B and 4C illustrate a method for improving predictive models used for controlling a temperature in an area;
Figure 5A illustrates a plurality of consecutive temperature measurements;
Figure 5B illustrates a plurality of consecutive humidity level measurements;
Figures 6A and 6B are schematic representations of a neural network inference engine executed by the environment controller of Figure 2 according to the method of Figures 4A-C; and
Figures 7A and 7B are schematic representations of a neural network inference engine executed by the environment controller of Figure 2 according to the method of Figures 4A-C.

### DETAILED DESCRIPTION

The foregoing and other features will become more apparent upon reading of the following non-restrictive description of illustrative embodiments thereof, given by way of example only with reference to the accompanying drawings.

Various aspects of the present disclosure generally address one or more of the problems related to environment control systems for buildings. More particularly, the present disclosure aims at providing solutions for improving predictive models for controlling a temperature in an area of a building. The improvement of the predictive models is based on user preferences / user feedbacks regarding the temperature in the area received from user devices (e.g. user votes for adjusting the current temperature according to an adjustment level selected among a pre-defined set of adjustment levels). The improvement of the predictive models is performed through reinforcement learning based on the votes received from the users.

The following terminology is used throughout the present specification:
Environment: condition(s) (temperature, pressure, oxygen level, light level, security, etc.) prevailing in a controlled area or place, such as for example in a building.
Environment control system: a set of components which collaborate for monitoring and controlling an environment.
Environmental data: any data (e.g. information, commands) related to an environment that may be exchanged between components of an environment control system.
Environment control device (ECD): generic name for a component of an environment control system. An ECD may consist of an environment controller, a sensor, a controlled appliance, etc.
Environment controller: device capable of receiving information related to an environment and sending commands based on such information.
Environmental characteristic: measurable, quantifiable or verifiable property of an environment (a building). The environmental characteristic comprises any of the following: temperature, pressure, humidity, lighting, CO2, flow, radiation, water level, speed, sound; a variation of at least one of the following, temperature, pressure, humidity and lighting, CO2 levels, flows, radiations, water levels, speed, sound levels, etc., and/or a combination thereof.
Environmental characteristic value: numerical, qualitative or verifiable representation of an environmental characteristic.
Sensor: device that detects an environmental characteristic and provides a numerical, quantitative or verifiable representation thereof. The numerical, quantitative or verifiable representation may be sent to an environment controller.
Controlled appliance: device that receives a command and executes the command. The command may be received from an environment controller.
Environmental state: a current condition of an environment based on an environmental characteristic, each environmental state may comprise a range of values or verifiable representation for the corresponding environmental characteristic.
VAV appliance: a Variable Air Volume appliance is a type of heating, ventilating, and / or air-conditioning (HVAC) system. By contrast to a Constant Air Volume (CAV) appliance, which supplies a constant airflow at a variable temperature, a VAV appliance varies the airflow at a constant temperature.
Area of a building: the expression 'area of a building' is used throughout the present specification to refer to the interior of a whole building or a portion of the interior of the building such as, without limitation: a floor, a room, an aisle, etc.

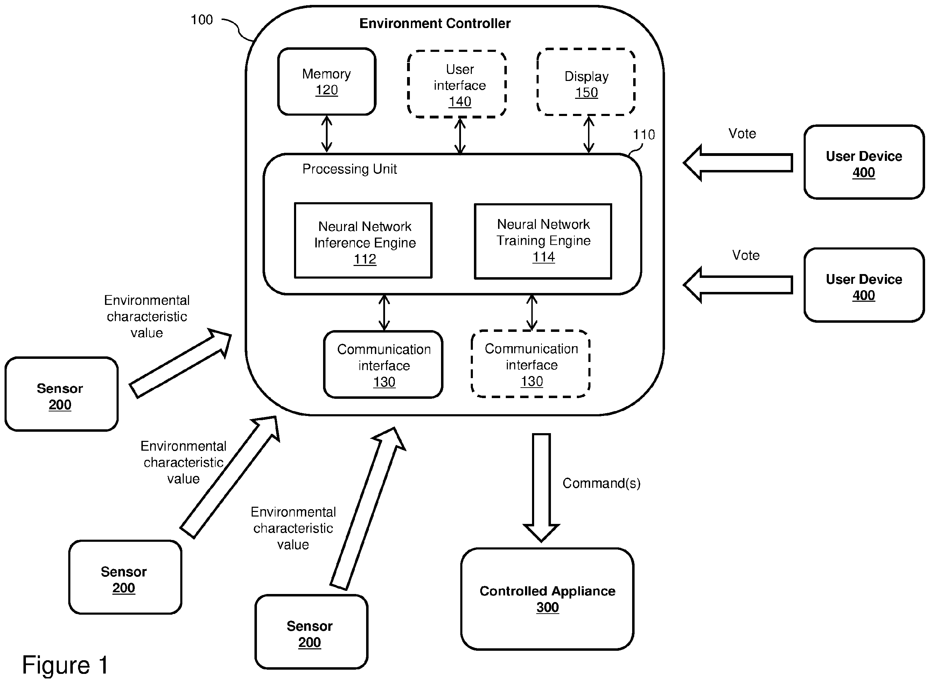

Referring now concurrently to Figures 1, 2, 3A, 3B, 4A, 4B and 4C, an environment controller 100 and a method 500 for improving predictive models used for controlling a temperature in an area are illustrated.

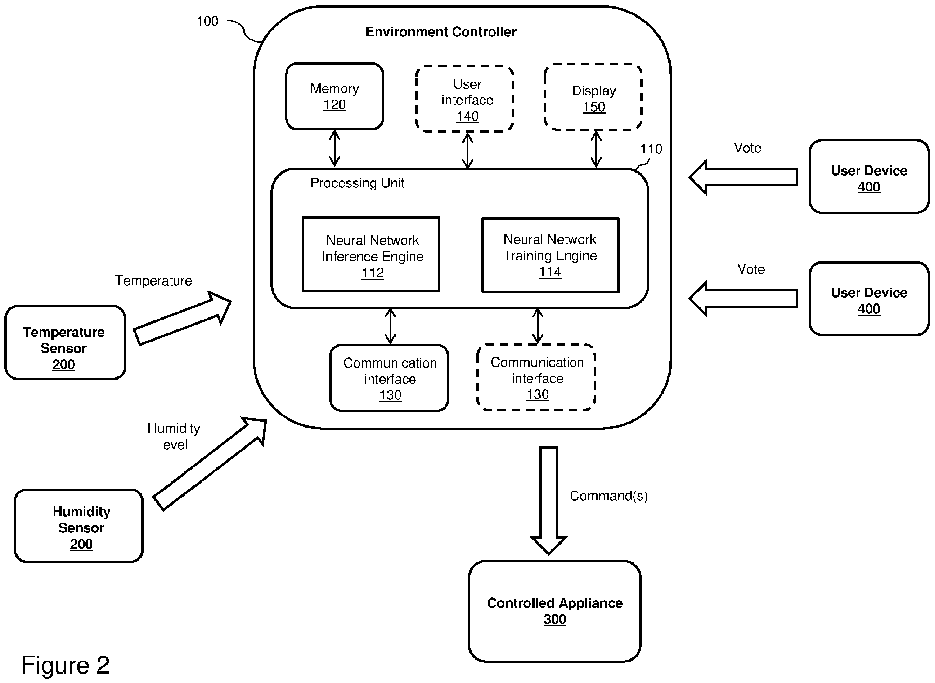

Figures 1 and 2 represent an environment control system where an environment controller 100 exchanges data with other environment control devices (ECDs). The environment controller 100 is responsible for controlling the environment of an area of a building. The environment controller 100 receives from sensors 200 environmental characteristic values measured by the sensors 200. The environment controller 100 generates commands based on the received environmental characteristic values. The generated commands are transmitted to controlled appliances 300 (to control the operations of the controlled appliances 300).

The area under the control of the environment controller 100 is not represented in the Figures for simplification purposes. As mentioned previously, the area may consist of a room, a floor, an aisle, etc. However, any type of area located inside any type of building is considered within the scope of the present disclosure.

Examples of sensors 200 (represented in Figure 2) include a temperature sensor, capable of measuring a temperature in the area and transmitting the temperature measured in the area to the environment controller 100. The examples also include a humidity sensor, capable of measuring a humidity level in the area and transmitting the humidity level measured in the area to the environment controller 100.

The aforementioned examples of sensors 200 are for illustration purposes only, other types of sensors 200 (e.g. a carbon dioxide (CO2) sensor, a lightning sensor, an occupancy sensor, etc.) could be used in the context of an environment control system managed by the environment controller 100. Furthermore, each environmental characteristic value measured by a sensor 200 may consist of either a single value (e.g. the current temperature is 25 degrees Celsius), or a range of values (e.g. the current temperature is in the range of 25 to 26 degrees Celsius).

In a first implementation, a single sensor 200 measures a given type of environmental characteristic value (e.g. temperature) for the whole area. In a second implementation, the area is divided into a plurality of zones, and a plurality of sensors 200 measures the given type of environmental characteristic value (e.g. temperature) in the corresponding plurality of zones. In the second implementation, the environment controller 100 calculates an average environmental characteristic value in the area (e.g. an average temperature in the area) based on the environmental characteristic values transmitted by the plurality of sensors respectively located in the plurality of zones of the area.

Additional sensor(s) 200 may be deployed outside of the area and report their measurement(s) to the environment controller 100. For example, the area is a room of a building. An external temperature sensor 200 measures an external temperature outside the building and transmits the measured external temperature to the environment controller 100. Similarly, an external humidity sensor 200 measures an external humidity level outside the building and transmits the measured external humidity level to the environment controller 100.

Each controlled appliance 300 comprises at least one actuation module, to control the operations of the controlled appliance 300 based on the commands received from the environment controller 100. The actuation module can be of one of the following type: mechanical, pneumatic, hydraulic, electrical, electronical, a combination thereof, etc. The commands control operations of the at least one actuation module.

An example of a controlled appliance 300 consists of a VAV appliance. Examples of commands transmitted to the VAV appliance 300 include commands directed to one of the following: an actuation module controlling the speed of a fan, an actuation module controlling the pressure generated by a compressor, an actuation module controlling a valve defining the rate of an airflow, etc. This example is for illustration purposes only. Other types of controlled appliances 300 could be used in the context of an environment control system managed by the environment controller 100.

Details of the environment controller 100, sensors 200 and control appliance 300 will now be provided. Although a single controlled appliance 300 is represented in Figures 1 and 2 for simplification purposes, the environment controller 100 may be interacting with a plurality of controlled appliances 300.

The environment controller 100 comprises a processing unit 110, memory 120, and a communication interface 130. The environment controller 100 may comprise additional components, such as another communication interface 130, a user interface 140, a display 150, etc.

The processing unit 110 comprises one or more processors (not represented in the Figures) capable of executing instructions of a computer program. Each processor may further comprise one or several cores.

The processing unit 110 executes a neural network inference engine 112 and a neural network training engine 114, as will be detailed later in the description. The neural network inference engine 112 and the neural network training engine 114 are two functionalities of the same computer program. Alternatively, the neural network inference engine 112 and the neural network training engine 114 are implemented by two independent computer programs.

The memory 120 stores instructions of computer program(s) executed by the processing unit 110, data generated by the execution of the computer program(s), data received via the communication interface 130 (or another communication interface), etc. Only a single memory 120 is represented in the Figures, but the environment controller 100 may comprise several types of memories, including volatile memory (such as a volatile Random Access Memory (RAM), etc.) and non-volatile memory (such as a hard drive, electrically-erasable programmable read-only memory (EEPROM), etc.).

The communication interface 130 allows the environment controller 100 to exchange data with remote devices (e.g. sensors 200, controlled appliance 300, etc.) over a communication network (not represented in the Figures for simplification purposes). For example, the communication network is a wired communication network, such as an Ethernet network; and the communication interface 130 is adapted to support communication protocols used to exchange data over the Ethernet network. Other types of wired communication networks may also be supported by the communication interface 130. In another example, the communication network is a wireless communication network, such as a Wi-Fi network; and the communication interface 130 is adapted to support communication protocols used to exchange data over the Wi-Fi network. Other types of wireless communication network may also be supported by the communication interface 130, such as a wireless mesh network. In still another example, the environment controller 100 comprises two communication interfaces 130. The environment controller 100 communicates with the sensors 200 and controlled appliances 300 via a first communication interface 130 (e.g. a Wi-Fi interface); and communicates with user devices 400 via a second communication interface 130 (e.g. Bluetooth^{®} or Bluetooth^{®} Low Energy (BLE) interface). Each communication interface 130 usually comprises a combination of hardware and software executed by the hardware, for implementing the communication functionalities of the communication interface 130

A detailed representation of the components of the sensors 200 is not provided in the Figures for simplification purposes. The sensors 200 comprise at least one sensing module for detecting an environmental characteristic; and further comprises a communication interface for transmitting to the environment controller 100 an environmental characteristic value (e.g. temperature or humidity level) corresponding to the detected environmental characteristic. The environmental characteristic value is transmitted over a communication network and received via the communication interface 130 of the environment controller 100. The sensors 200 may also comprise a processing unit for generating the environmental characteristic value based on the detected environmental characteristic.

A detailed representation of the components of the controlled appliance 300 is not provided in the Figures for simplification purposes. As mentioned previously, the controlled appliance 300 comprises at least one actuation module; and further comprises a communication interface for receiving one or more commands from the environment controller 100. The one or more commands control operations of the at least one actuation module. The one or more commands are transmitted over a communication network via the communication interface 130 of the environment controller 100. The controlled appliance 300 may also comprise a processing unit for controlling the operations of the at least one actuation module based on the received one or more commands.

Two user devices 400 interacting with the environment controller 100 are also represented in Figures 1 and 2. Each user device 400 transmits a vote related to the current temperature in the area to the environment controller 100. More specifically, a user of each user device 400 uses a voting application executed by the processing unit of the user device 400 to send a user preference / user feedback based on the user perception of the temperature in the area. For example, If the user feels that the current temperature is too high, he can vote to decrease the temperature in the area. If the user feels that the current temperature is too low, he can vote to increase the temperature in the area.

Although two user devices 400 are represented in the Figures for illustration purposes, any number of user devices 400 (from 0 to N) may be respectively sending a vote during a given period of time. The number of votes transmitted to the environment controller 100 depends on the number of persons present in the area, the number of persons present in the area who are willing to provide a user preference / user feedback in the form of the vote via their respective user device 400, etc. The usage made by the environment controller 100 of the received vote(s) will be detailed later in the description.

A detailed representation of the components of the user devices 400 is not provided in the Figures for simplification purposes. The user devices 400 comprise a processing unit, memory, and at least one communication interface. The user devices 400 also comprise a user interface and a display for generating the votes through interactions with the users of the user devices. Examples of user devices 400 include a smartphone, a tablet, a smartwatch, a laptop, a desktop, etc.

One among the at least one communication interface of the user devices 400 is used for interacting with the environment controller 100, in particular for transmitting the votes. As mentioned previously, various communication standards can be used for the interactions between the user devices 400 and the environment controller 100, such as Wi-Fi, Bluetooth^{®}, Bluetooth^{®} Low Energy (BLE), etc. In the case of BLE, the user devices 400 communicate directly with the environment controller 100 using the BLE standard, if one of the communication interfaces 130 of the environment controller 100 supports the BLE standard. Alternatively, the user devices 400 communicate with a BLE proxy device (not represented in Figure 2 for simplification purposes) using the BLE standard, and the BLE proxy device communicates with the environment controller 100 via another communication standard (e.g. Wi-Fi) supported by the environment controller 100.

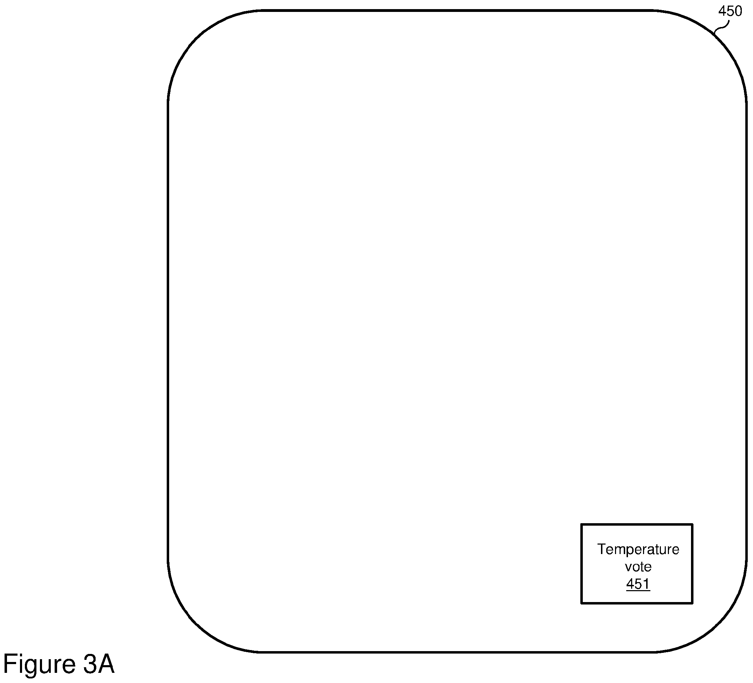

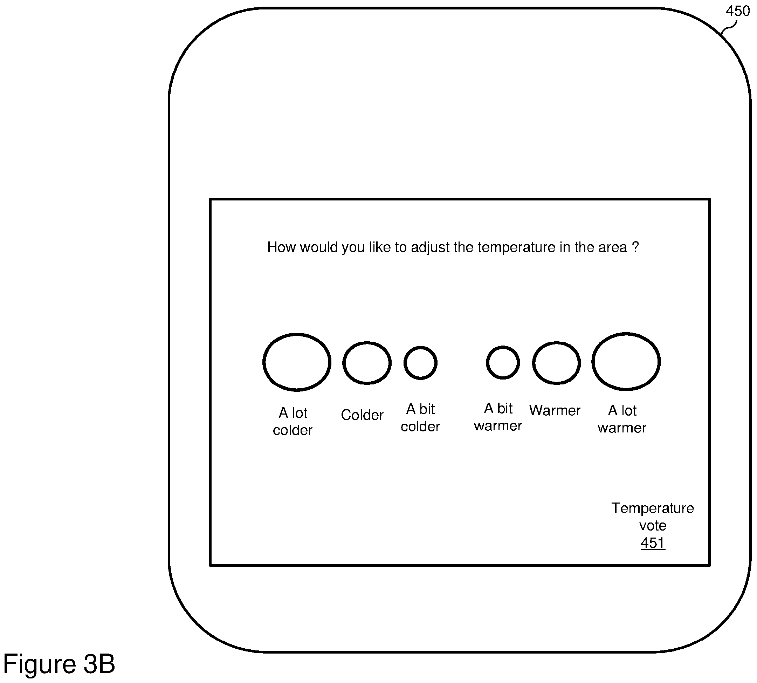

Referring now more particularly to Figures 3A and 3B, an exemplary user interface for generating the vote is represented. In Figure 3A, the display 450 of the user device 400 is represented. An icon 451 is displayed on the display 450. The selection of the icon 451 by a user (via the user interface of the user device 400) launches a voting application (also referred to as an applet in the context of smartphones or tablets). In Figure 3B, the display 450 of the user device 400 is represented when the voting application is launched. The user interface of the voting application 451 is displayed on the display 450. The vote is related to the current temperature in the area. For example, the vote is representative of how the user of the user device 400 would like the current temperature in the area to evolve (increase or decrease, and in which proportion). For illustration purposes, the user interface of the voting application 451 comprises six buttons: a lot colder, colder, a bit colder, a bit warmer, warmer and a lot warmer. The selection of one of the six buttons by the user (via the user interface of the user device 400) triggers the transmission of the vote from the user device 400 to the environment controller 100. For example, each possible selection (a lot colder, colder, a bit colder, a bit warmer, warmer and lot warmer) is encoded with a pre-defined numerical value transmitted to the environment controller 100. Thus, each vote comprises a user preference (e.g. a bit warmer or a bit colder) encoded with one of the pre-defined numerical values (e.g. +1 and -1). In addition to the user preference, each vote may include additional information. For example, the vote also includes a unique identifier of the user himself or of the user device 400 used by the user. The unique identifier can be used for filtering some of the votes, applying different weighting factors to the votes, etc.

The voting user interface represented in Figure 3B is for illustration purposes only. A person skilled in the art may design the voting user interface in a different manner. Furthermore, the voting user interface is not limited to the six possible selections (a lot colder, colder, a bit colder, a bit warmer, warmer and lot warmer) represented in Figure 3B, but may include more or less selections, as well as different types of selections. For instance, instead of a selection among user preferences, the user interface may include a selection among user feedbacks expressing the feeling of the user with respect to the current temperature (e.g. way too cold, too cold, a bit too cold, a bit too hot, too hot and way too hot).

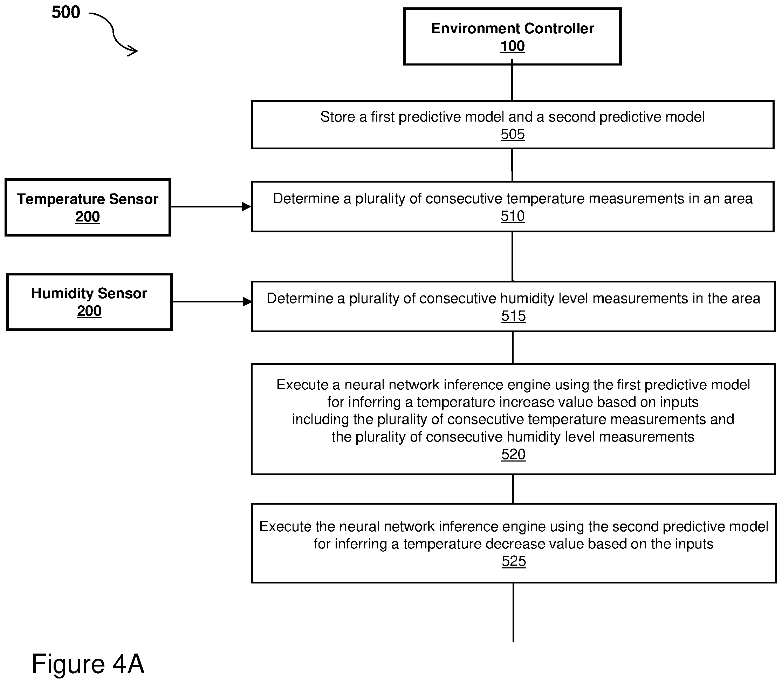

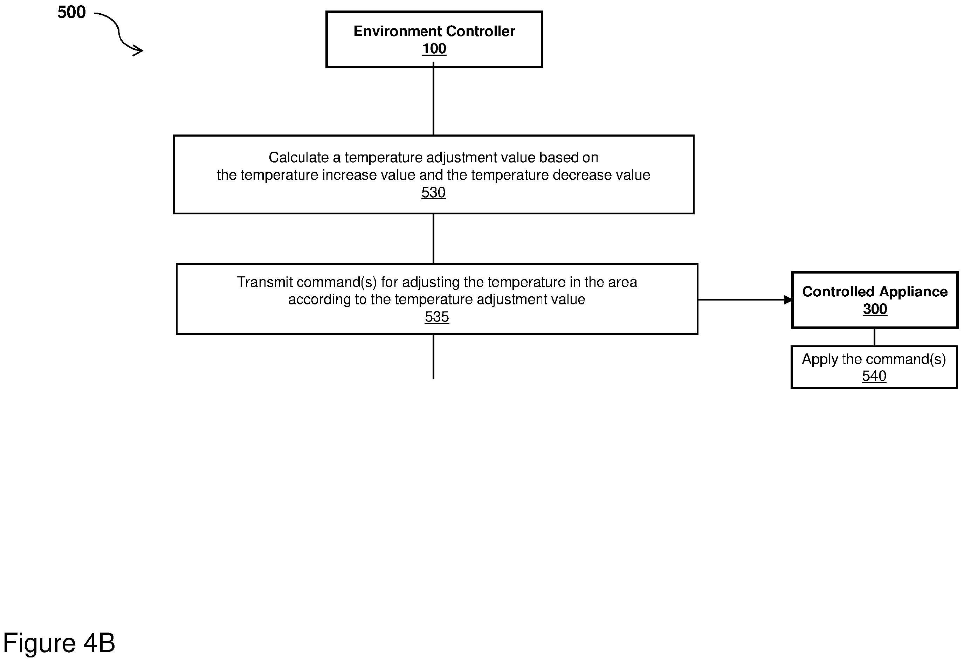

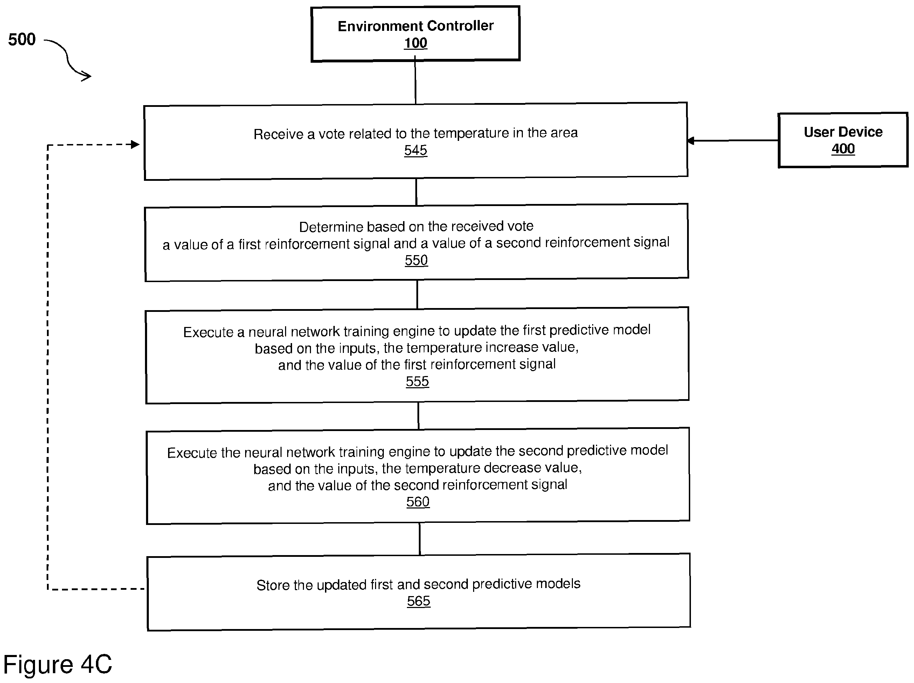

Reference is now made more particularly to Figures 4A, 4B and 4C. At least some of the steps of the method 500 represented in Figures 4A, 4B and 4C are implemented by the environment controller 100, to improve predictive models used for controlling the temperature in the area.

The method 500 starts with initial first and second predictive models that may not be adapted to the area. The initial first and second predictive models have been generated during an initial training phase that will be described later. The initial first and second predictive models are adapted to being used for a given type of area (e.g. rooms having specific geometric characteristics, such as surface, height, surface and orientation of the windows, etc.). The current area (on which the method 500 is applied) corresponds to the given type of area, but has particular characteristics (e.g. number of persons present in the area) that render the initial first and second predictive models less accurate than expected, and possibly even totally inaccurate.

The method 500 is repeated a plurality of times with the purpose of improving the first and second predictive models to reach a satisfying level of accuracy. At each iteration of the method 500, the current first and second predictive models are used by the neural network inference engine 112 to infer the "ideal" temperature for the area based on several inputs. The "ideal" temperature is a temperature that will represent the best compromise for all the persons present in the area. Some of these persons may prefer a warmer atmosphere while others may prefer a colder atmosphere. The "ideal" temperature aims at satisfying, to the extent possible, all the persons present in the area. At each iteration of the method 500, the "ideal" temperature inferred by the neural network inference engine 112 is enforced in the area. Then, the persons present in the area have the capability to express via a vote a user preference (I would prefer the temperature to be warmer or colder), a user feedback (I find the temperature too warm or too cold), etc. The vote(s) are used to generate updated first and second predictive models by using the neural network training engine 114 to implement reinforcement training based on the vote(s).

A dedicated computer program has instructions for implementing at least some of the steps of the method 500. The instructions are comprised in a non-transitory computer program product (e.g. the memory 120) of the environment controller 100. The instructions provide for improving the predictive models used for controlling the temperature in the area, when executed by the processing unit 110 of the environment controller 100. The instructions are deliverable to the environment controller 100 via an electronically-readable media such as a storage media (e.g. CD-ROM, USB key, etc.), or via communication links (e.g. via a communication network through the communication interface 130).

The method 500 comprises the step 505 of storing the first predictive model and the second predictive model in the memory 120 of the environment controller 100. Step 505 is performed by the processing unit 110 of the environment controller 100. More specifically, step 505 stores the initial first and second predictive models, which have been generated during the initial training phase, as mentioned previously.

The method 500 comprises the step 510 of determining a plurality of consecutive temperature measurements in the area. Step 510 is performed by the processing unit 110 of the environment controller 100. The consecutive temperature measurements are determined based on temperature data, collected by the temperature sensor 200 of Figure 2 and transmitted to the environment controller 100. The temperature data are received via the communication interface 130 of the environment controller 100. The consecutive temperature measurements consist of N temperature measurements respectively performed on N consecutive intervals of time, N being an integer greater or equal than 2 (e.g. 3 intervals of 30 seconds each).

Step 510 can be implemented in different ways. For example, for each interval of time, the temperature sensor 200 is configured to spontaneously make a single temperature measurement, which is transmitted to the environment controller 100 and used for a given interval of time at step 510. Alternatively, for each interval of time, the temperature sensor 200 is configured to spontaneously make several temperature measurements, the average of the several temperature measurements being calculated and transmitted by the temperature sensor 200 to the environment controller 100, to be used for a given interval of time at step 510. In still another alternative implementation, the temperature sensor 200 has no knowledge of the intervals of time and simply transmits temperature data to the environment controller 100. In this case, at each interval of time, the environment controller 100 sends a request to the temperature sensor 200 to transmit a temperature measurement. The temperature sensor 200 sends the requested temperature measurement to the environment controller, which uses the temperature measurement received from the temperature sensor 200 for a given interval of time at step 510. Instead of a single temperature measurement for each interval of time, the environment controller 100 may request and receive a plurality of temperature measurements from the temperature sensor 200; and use the average of the plurality of temperature measurements for a given interval of time at step 510.

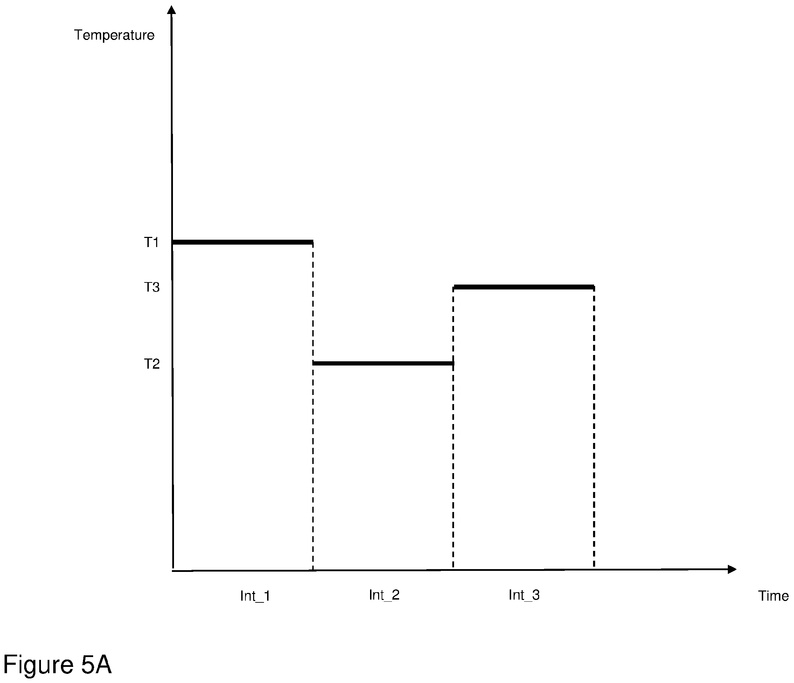

Figure 5A illustrates an exemplary implementation of step 510 with 3 intervals of times. Three consecutive temperature measurements are determined at step 510: T1 for time interval Int_1, T2 for time interval Int_2 and T3 for time interval Int_3.

The method 500 comprises the step 515 of determining a plurality of consecutive humidity level measurements in the area. Step 515 is performed by the processing unit 110 of the environment controller 100. The consecutive humidity level measurements are determined based on humidity level data, collected by the humidity sensor 200 of Figure 2 and transmitted to the environment controller 100. The humidity level data are received via the communication interface 130 of the environment controller 100. The consecutive humidity level measurements consist of N humidity level measurements respectively performed on N consecutive intervals of time, N being an integer greater or equal than 2 (e.g. 3 intervals of 30 seconds each). The number of consecutive intervals of time and the duration of each interval of time are similar for steps 510 and 515. However, steps 510 and 515 may also be implemented with a different number of intervals of time and / or a different duration for each interval of time.

Step 515 can be implemented in different ways. The exemplary implementations provided with respect to step 510 are applicable to step 515; by replacing the temperature measurements with humidity level measurements and the temperature sensor 200 with the humidity sensor 200.

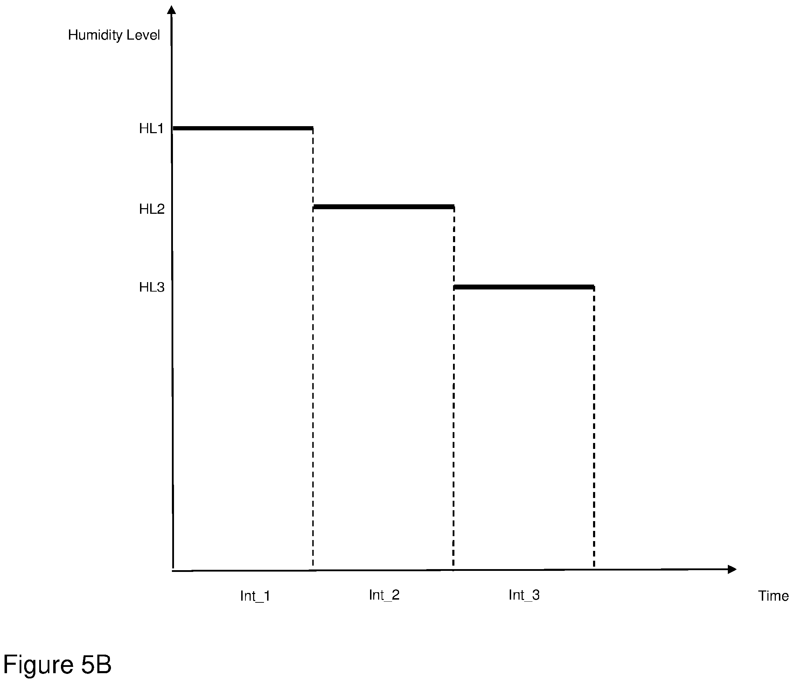

Figure 5B illustrates an exemplary implementation of step 515 with 3 intervals of times. Three consecutive humidity level measurements are determined at step 515: HL1 for time interval Int_1, HL2 for time interval Int_2 and HL3 for time interval Int_3.

The method 500 comprises the step 520 of executing the neural network inference engine 112 using the first predictive model (stored at step 505) for inferring a temperature increase value based on inputs. Step 520 is performed by the processing unit 110 of the environment controller 100. The inputs include the plurality of consecutive temperature measurements (determined at step 510) and the plurality of consecutive humidity level measurements (determined at step 515).

The method 500 comprises the step 525 of executing the neural network inference engine 112 using the second predictive model (stored at step 505) for inferring a temperature decrease value based on the same inputs as step 520. Step 525 is performed by the processing unit 110 of the environment controller 100.

It has been determined experimentally that steps 520 and 525 are more effective when a plurality of consecutive temperature measurements and a plurality of consecutive humidity level measurements are used as inputs, instead of a single temperature measurement and a single humidity level measurement.

It has also been determined experimentally that it is more effective to independently infer a temperature increase value and a temperature decrease value using two different predictive models (as per steps 520 and 525), instead of directly inferring a temperature adjustment value using a single predictive model.

All the temperatures mentioned in the present disclosure (including the plurality of consecutive temperature measurements at step 510, the temperature increase value at step 520, the temperature decrease value at step 525 and the temperature adjustment value which will be described at step 530) may be expressed in degrees Celsius or degrees Fahrenheit.

The temperature increase value inferred at step 520 represents a recommendation for increasing the temperature in the area and is positive. For example, a value of 2 is interpreted as a recommendation for increasing the temperature in the area by 2 degrees Celsius.

The temperature decrease value inferred at step 525 represents a recommendation for decreasing the temperature in the area and is positive. For example, a value of 2 is interpreted as a recommendation for decreasing the temperature in the area by 2 degrees Celsius.

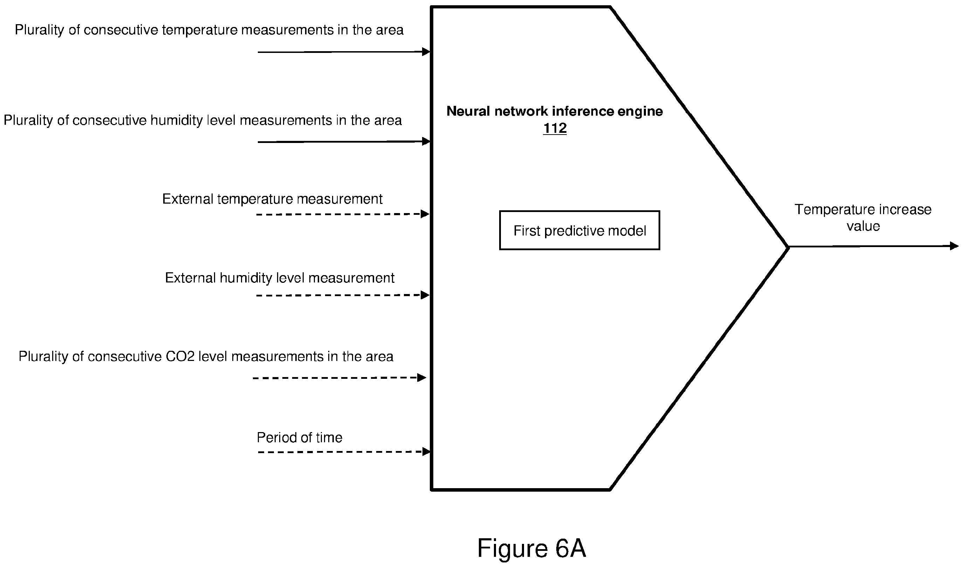

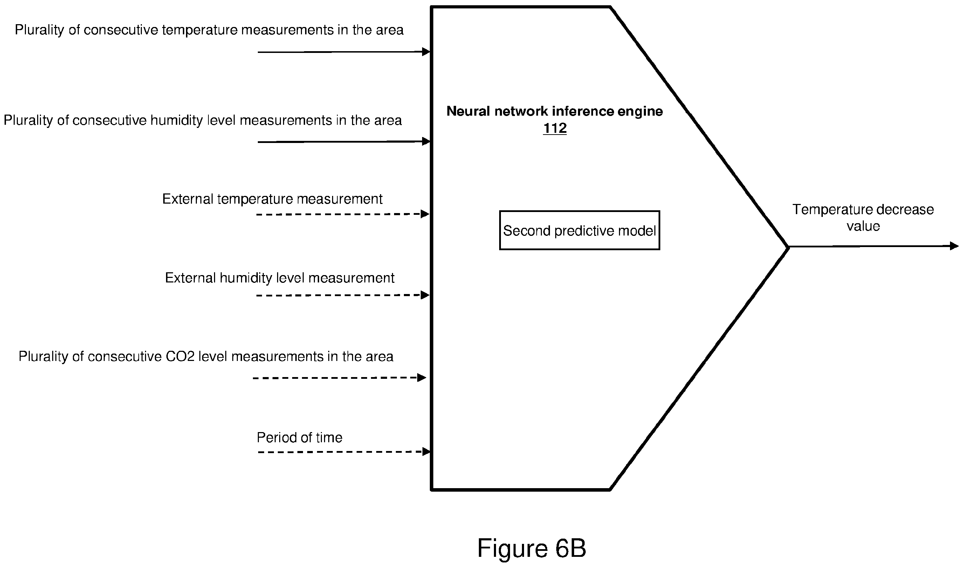

Figures 6A and 6B illustrate the inputs and the outputs used by the neural network inference engine 112 when respectively performing steps 520 and 525.

As illustrated in Figures 6A and 6B, additional input parameters can be used by the neural network inference engine 112. For example, an external temperature measurement is also used for the inputs at steps 520 and 525. The external temperature is measured outside the building where the area is located. A single external temperature measurement is used over the consecutive intervals of time considered at step 510, since the external temperature does not vary much over the consecutive intervals of time (e.g. 3 intervals of 30 seconds each). An external temperature sensor (not represented in Figure 2 for simplification purposes) measures the external temperature outside of the building and transmits the measured external temperature to the environment controller 100, for use at steps 520 and 525.

Similarly, an external humidity level measurement is also used for the inputs at steps 520 and 525. The external humidity level is measured outside the building where the area is located. A single external humidity level measurement is used over the consecutive intervals of time considered at step 515, since the external humidity level does not vary much over the consecutive intervals of time (e.g. 3 intervals of 30 seconds each). An external humidity sensor (not represented in Figure 2 for simplification purposes) measures the external humidity level outside of the building and transmits the measured external humidity level to the environment controller 110, for use at steps 520 and 525.

The external temperature measurement and the external humidity level measurement are used in combination as inputs at steps 520 and 525. Alternatively, only one of the external temperature measurement or the external humidity level measurement is used as input at steps 520 and 525.

Optionally, a plurality of consecutive CO2 level measurements in the area is also used for the inputs at steps 520 and 525. A CO2 sensor located in the area transmits CO2 level data to the environment controller 110, which are used for determining the plurality of consecutive CO2 level measurements. The determination is performed in a manner similar to the determination of the plurality of consecutive measurements at steps 510 (for the temperature) and 515 (for the humidity level).

Optionally, a period of time is also used as an input parameter by the neural network inference engine 112 at steps 520 and 525. Examples of periods of time include: day and night; morning, afternoon and evening; week days or weekends; a given time interval during the day (e.g. 7 am to 9 am, 9 am to 12 pm, 12 pm to 5 pm and 5 pm to 7pm); a combination of some of the previous examples; etc. The current period of time used as input at steps 520 and 525 is determined by the processing unit 110 of the environment controller 100.

The usage of the optional inputs (external temperature measurement, external humidity level measurement, plurality of consecutive CO2 level measurements in the area, and period of time) in combination or individually may improve the accuracy and resiliency of the inferences performed by the neural network inference engine 112 (at the cost of complexifying the predictive models used by the neural network inference engine 112). The relevance of using at least some of the optional inputs is generally evaluated during the training phase, when the predictive models are generated (and tested) with a set of training (and testing) inputs and outputs dedicated to the training (and testing) phase. The usage of the optional inputs (as inputs of the neural network inference engine 112 at steps 520 and 525) has not been represented in Figure 4A for simplification purposes.

The same set of inputs is used at steps 520 and 525. However, it may also be determined experimentally that the first and second predictive models are more efficiently used with different sets of inputs when respectively executing steps 520 and 525.

The method 500 comprises the step 530 of calculating a temperature adjustment value based on the temperature increase value inferred at step 520 and the temperature decrease value inferred at step 525. Step 530 is performed by the processing unit 110 of the environment controller 100.

In a first implementation, the temperature adjustment value consists of the difference between the temperature increase value and the temperature decrease value. For example, if the temperature increase value and the temperature decrease value are respectively 1.5 and 0.5, then the temperature adjustment value is 1.5 - 0.5 = 1 (increase the temperature in the area by one degree). In another example, if the temperature increase value and the temperature decrease value are respectively 1 and 2, then the temperature adjustment value is 1 - 2 = -1 (decrease the temperature in the area by one degree).

In a second implementation, the absolute value of the temperature adjustment value consists of the greatest of the temperature increase value and the temperature decrease value. The sign of the temperature adjustment value is positive if the greatest is the temperature increase value, and negative otherwise. For example, if the temperature increase value and the temperature decrease value are respectively 1.5 and 0.5, then the temperature adjustment value is 1.5 (increase the temperature in the area by one and a half degree). In another example, if the temperature increase value and the temperature decrease value are respectively 1 and 2, then the temperature adjustment value is -2 (decrease the temperature in the area by two degrees).

The method 500 comprises the step 535 of transmitting at least one command to at least one controlled appliance 300 for adjusting the temperature in the area according to the temperature adjustment value (calculated at step 530). Step 535 is performed by the processing unit 110 of the environment controller 100. The command is transmitted via the communication interface 130 of the environment controller 100.

In a first implementation, the command comprises the temperature adjustment value; and the one or more controlled appliance 300 is in charge of converting the temperature adjustment value into actuating command(s) for controlling actuator(s) of the controlled appliance 300.

In a second implementation, the processing unit 110 of the environment controller 100 converts the temperature adjustment value into actuating command(s) for controlling actuator(s) of the controlled appliance(s) 300. The one or more command transmitted at step 535 comprises the internal command(s) for controlling the actuator(s) of the controlled appliance(s) 300.

As mentioned previously, examples of the actuating command(s) for controlling actuator(s) of the controlled appliance(s) 300 include actuating command(s) for controlling the speed of a fan, controlling the pressure generated by a compressor, controlling a valve defining the rate of an airflow, etc.

The method 500 comprises the step 540 of applying the one or more command (transmitted at step 535). Step 540 is performed by the processing unit of the controlled appliance 300. The one or more command is received via the communication interface of the controlled appliance 300. The processing unit of the controlled appliance 300 controls the operations of one or more actuator of the controlled appliance 300 according to the received one or more command.

For example, if the current temperature in the area is 19 degrees Celsius and the temperature adjustment value calculated at step 530 is 2 degrees Celsius (raising by 2 degrees Celsius), then steps 535-540 result in the adjustment of the temperature in the area to 21 degrees Celsius. In another example, if the current temperature in the area is 27 degrees Celsius and the temperature adjustment value calculated at step 530 is -3 degrees Celsius (decreasing by 3 degrees Celsius), then steps 535-540 result in the adjustment of the temperature in the area to 24 degrees Celsius.

The method 500 comprises the step 545 of receiving a vote related to the temperature in the area transmitted by a user device 400. Step 545 is performed by the processing unit 110 of the environment controller 100. The vote is received via the communication interface 130 of the environment controller 100.

An exemplary implementation of the voting mechanism has been previously described in relation to Figures 3A and 3B, where user preferences for the temperature in the area include a lot colder, colder, a bit colder, a bit warmer, warmer and a lot warmer. The implementation of the method 500 is not limited to this particular example of voting mechanism. A person skilled in the art could design another voting mechanism adapted for the improvement of the predictive models performed via the method 500.

The method 500 comprises the step 550 of determining, based on the vote received at step 545, a value of a first reinforcement signal and a value of a second reinforcement signal. Step 550 is performed by the processing unit 110 of the environment controller 100.

Step 550 converts the vote received at step 545 into a first numerical value, which is used as the first reinforcement signal at step 555. Step 550 also converts the vote received at step 545 into a second numerical value, which is used as the second reinforcement signal at step 560.

The method 500 comprises the step 555 of executing the neural network training engine 114 to update the first predictive model based on the inputs (used at step 520), the temperature increase value (inferred at step 520) and the value of the first reinforcement signal (determined at step 550). Step 555 is performed by the processing unit 110 of the environment controller 100.

The method 500 comprises the step 560 of executing the neural network training engine 114 to update the second predictive model based on the inputs (used at step 525), the temperature decrease value (inferred at step 525) and the value of the second reinforcement signal (determined at step 550). Step 560 is performed by the processing unit 110 of the environment controller 100.

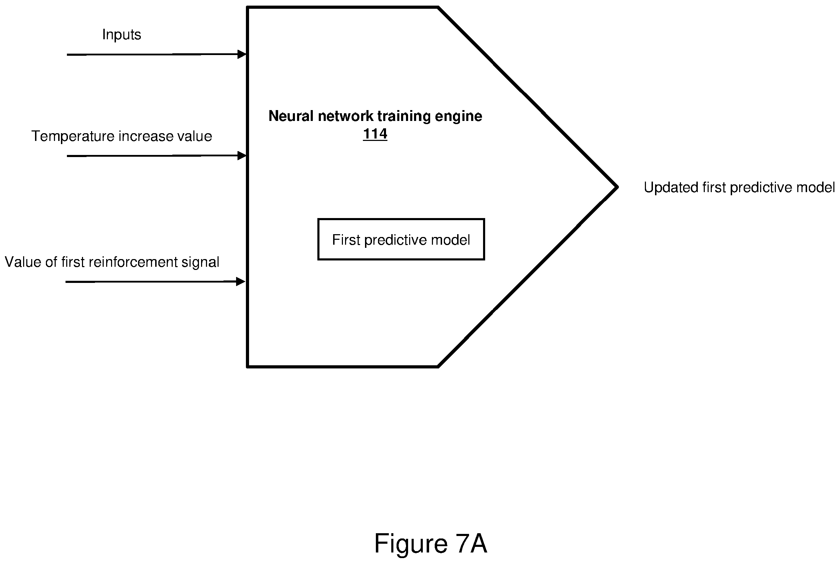

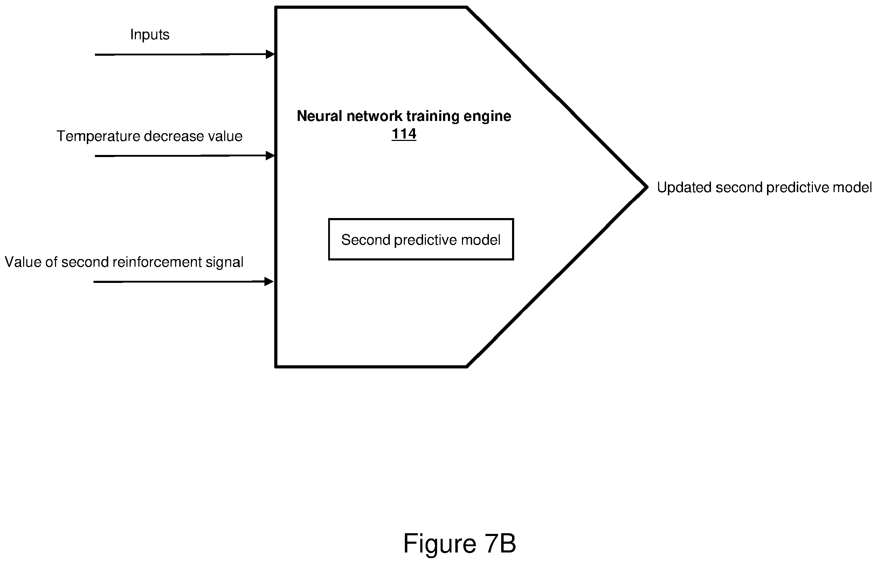

Figures 7A and 7B respectively illustrate the neural network training engine 114 when performing steps 555 and 560. The inputs have not been detailed for simplification purposes. The inputs correspond to the inputs of the neural network inference engine 112 represented in Figures 6A and 6B.

The method 500 comprises the step 565 of storing the updated first (at step 555) and second (at step 560) predictive models in the memory 120. Step 565 is performed by the processing unit 110 of the environment controller 100.

The first predictive model is used for inferring a temperature increase and the second predictive model is used for inferring a temperature decrease. Thus, if the vote indicates that the user would prefer a higher temperature, the first reinforcement signal is a positive reward for the first predictive model and the second reinforcement signal is a negative reward for the second predictive model. Similarly, if the vote indicates that the user would prefer a lower temperature, the first reinforcement signal is a negative reward for the first predictive model and the second reinforcement signal is a positive reward for the second predictive model. The notion of reinforcement training based on positive and negative rewards is well known in the art of neural network.

Having given inputs and a corresponding output (temperature increase value) at step 520, the weights of the first predictive model are updated at step 555 based on the value of the first reinforcement signal determined at step 550 for these given inputs and corresponding output. The update of the weights results in an adjustment of the output (temperature increase value) when presented with the same given inputs, the adjustment being compliant with the value of the first reinforcement signal. For example, a positive reward for the reinforcement signal maintains or raises the value of the output (temperature increase value) inferred at step 520. Conversely, a negative reward for the reinforcement signal lowers the output (the temperature increase value) inferred at step 520.

Similarly, having given inputs and a corresponding output (temperature decrease value) at step 525, the weights of the second predictive model are updated at step 560 based on the value of the second reinforcement signal determined at step 550 for these given inputs and corresponding output. The update of the weights results in an adjustment of the output (temperature decrease value) when presented with the same given inputs, the adjustment being compliant with the value of the second reinforcement signal. For example, a positive reward for the reinforcement signal maintains or raises the value of the output (temperature decrease value) inferred at step 525. Conversely, a negative reward for the reinforcement signal lowers the output (the temperature decrease value) inferred at step 525.

Following is an exemplary implementation of steps 545 to 560. As mentioned previously in relation to Figure 3B, the vote comprises a user preference and the following values are associated to the user preference for the temperature in the area: -3 for a lot colder, -2 for colder, -1 for a bit colder, +1 for a bit warmer, +2 for warmer and +3 for a lot warmer. The user preference is included in the vote received from the mobile device 400 at step 545. The user preference is representative of how the user would like to adjust the temperature in the area.

If the user preference is +3 (a lot warmer), the first reinforcement signal is set to +1 and the second reinforcement signal is set to -3.

If the user preference is +2 (warmer), the first reinforcement signal is set to +1 and the second reinforcement signal is set to -2.

If the user preference is +1 (a bit warmer), the first reinforcement signal is set to +1 and the second reinforcement signal is set to -1.

If the user preference is -3 (a lot colder), the first reinforcement signal is set to -3 and the second reinforcement signal is set to +1.

If the user preference is -2 (colder), the first reinforcement signal is set to -2 and the second reinforcement signal is set to +1.

If the user preference is -1 (a bit colder), the first reinforcement signal is set to -1 and the second reinforcement signal is set to +1.

The neural network training engine 114 is adapted and configured to adapt the weights of the first and second predictive models based on reinforcement signals taking the values -3, -2, -1 and +1.

Several votes may be received from the same or different user devices 400. Thus, as illustrated in Figure 4C, one iteration of steps 545-550-555-560-565 is performed for each received vote. The number of performed iterations is not limited. However, a given user device 400 is prevented from voting more than a pre-defined number of times (e.g. only once). This limitation applies after one iteration of steps 510-515-520-525-530-535-540 is performed. If a new iteration of steps 510-515-520-525-530-535-540 occurs, any device 400 can start voting (again). Although not illustrated in Figures 4A and 4B for simplification purposes, steps 510-515-520-525-530-535-540 are repeated regularly to adapt the temperature in the area to the current environmental conditions in the area (monitored and reported by sensors as illustrated by steps 510 and 515).

Following is an exemplary sequence of execution of the steps of the method 500. First, one iteration of steps 505-510-515-520-525-530-535-540. Then three iterations of steps 545-550-555-560-565. Then, one iteration of steps 510-515-520-525-530-535-540. Then two iterations of steps 545-550-555-560-565. Then, one iteration of steps 510-515-520-525-530-535-540. Then three iterations of steps 545-550-555-560-565. Etc.

An additional optional mechanism is implemented by the method 500 for improving the first and second predictive models. This additional optional mechanism is not represented in Figures 4A to 4C for simplification purposes. A pre-defined duration is stored in the memory 120. If no vote is received (as per step 545) from the user devices 400 after a period of time corresponding to the pre-defined duration, then values of the first and second reinforcement signals are determined. The values of the first and second reinforcement signals are positive rewards (e.g. +1) to reinforce the current first and second predictive models, since no user has been complaining (via a vote) about the temperature in the area for an amount of time equal to the pre-defined duration. Then, steps 555-560-565 are performed, using the determined values of the first and second reinforcement signals with the inputs and outputs used during the last iteration of steps 520 and 525. The pre-defined duration is configurable and may be dynamically adjusted (e.g. increased after each consecutive elapsed duration for which a vote is not received). A new timeout configured with the pre-defined duration is started each time a new iteration of steps 510-515-520-525-530-535-540 is performed. The current timeout is cancelled if a new iteration of steps 510-515-520-525-530-535-540 is performed.

Following is a description of an exemplary initial training procedure for generating the initial first and second predictive models that will be used by the method 500. The initial first and second predictive models are generated on the environment controller 100 via the neural network training engine 114. Alternatively, the initial first and second predictive models are generated on a training server (not represented in Figure 2 for simplification purposes) executing a neural network training engine, and transferred to the environment controller 100. The initial first and second predictive models are stored in the memory 120 as per step 505 of the method 500.

The initial training procedure is performed in a reference area during an initial training phase. The inputs of the first and second predictive models are collected via sensors located in the reference area as described previously. The temperature adjustments in the reference area are controlled through a legacy environment control system (not using artificial intelligence) and recorded. Based on the recorded temperature adjustment values, respective outputs for the first predictive model (temperature increase value) and the second predictive model (temperature decrease value) are generated. For instance, if the recorded temperature adjustment value is +2 degrees Celsius, then the temperature increase value is set to 2 and the temperature decrease value is set to 0. If the recorded temperature adjustment value is -1 degrees Celsius, then the temperature decrease value is set to 1 and the temperature increase value is set to 0. A plurality of sets of inputs and corresponding outputs are used for training the first and second predictive models, to obtain the initial first and second predictive models at the end of the initial training phase.

As is well known in the art of neural networks, during the initial training phase, the neural network implemented by the neural network training engine adjusts its weights. Furthermore, during the initial training phase, the number of layers of the neural network and the number of nodes per layer can be adjusted to improve the accuracy of the model. At the end of the initial training phase, the predictive model generated by the neural network training engine includes the number of layers, the number of nodes per layer, and the weights.

## Claims

1. A method for improving predictive models of a neural network used for controlling a temperature in an area, the method comprising:
storing a first predictive model comprising a first set of weights of a neural network and a second predictive model comprising a second set of weights of a neural network in a memory (120) of an environment controller (505, 100);
determining by a processing unit (110) of the environment controller (100) a plurality of consecutive temperature measurements in the area (510);
determining by the processing unit (110) of the environment controller (100) a plurality of consecutive humidity level measurements in the area (515);
executing by the processing unit (110) of the environment controller (100) a neural network inference engine (112) using the first set of weights of the first predictive model for inferring a temperature increase value based on inputs, the inputs comprising the plurality of consecutive temperature measurements and the plurality of consecutive humidity level measurements (520);
executing by the processing unit (110) of the environment controller (100) the neural network inference engine (112) using the second set of weights of the second predictive model for inferring a temperature decrease value based on the inputs (525);
calculating by the processing unit (110) of the environment controller (100) a temperature adjustment value based on the temperature increase value and the temperature decrease value (530);
transmitting by the processing unit (110) of the environment controller (100) at least one command to at least one controlled appliance for adjusting the temperature in the area according to the temperature adjustment value (535);
receiving by the processing unit (110) of the environment controller (100) a user preference related to the temperature in the area, the user preference being transmitted by a user device (400, 545);
determining by the processing unit (110) of the environment controller (100) based on the received user preference a value of a first reinforcement signal and a value of a second reinforcement signal (550);
executing by the processing unit (110) of the environment controller (100) a neural network training engine (114) implementing reinforcement training to update the first set of weights of the first predictive model based on the inputs, the temperature increase value and the value of the first reinforcement signal (555);
executing by the processing unit (110) of the environment controller (100) the neural network training engine (114) implementing reinforcement training to update the second set of weights of the second predictive model based on the inputs, the temperature decrease value and the value of the second reinforcement signal (560); and
storing the updated first and second sets of weights of the respective first and second predictive models in the memory (120) of the environment controller (565, 100).

2. The method of claim 1, wherein the area is located in a building.

3. The method of claim 1, wherein the processing unit (110) of the environment controller (100) further determines at least one of a temperature measurement outside the area, a humidity level measurement outside the area, a plurality of consecutive carbon dioxide (CO2) level measurements in the area, and a period of time; and the inputs further comprise the at least one of the temperature measurement outside the area, the humidity level measurement outside the area, the plurality of consecutive CO2 level measurements in the area, and the period of time.

4. The method of claim 1, wherein the calculation of the temperature adjustment value based on the temperature increase value and the temperature decrease value consists of one of the following: the temperature adjustment value is the difference between the temperature increase value and the temperature decrease value; and the absolute value of the temperature adjustment value is the greatest of the temperature increase value and the temperature decrease value, and the sign of the temperature adjustment value is positive if the greatest is the temperature increase value, and negative otherwise.

5. The method of claim 1, wherein a plurality of user preferences is received, a corresponding plurality of values of the first and second reinforcement signals is determined, and a corresponding plurality of executions of the neural network training engine (114) is performed for generating the updated first and second sets of weights of the respective first and second predictive models.

6. The method of claim 1, wherein if no user preference is received after a period of time corresponding to a pre-defined duration, then values of the first and second reinforcement signals consisting of positive rewards are determined and the neural network training engine (114) is executed for updating the first and second sets of weights of the respective first and second predictive models using the determined values of the first and second reinforcement signals.

7. The method of claim 1, wherein each user preference is selected among a pre-defined set of user preferences.

8. The method of claim 1, wherein the value of the first reinforcement signal is a positive reward and the value of the second reinforcement signal is a negative reward, or the value of the first reinforcement signal is a negative reward and the value of the second reinforcement signal is a positive reward.

9. A non-transitory computer program product comprising instructions executable by a processing unit (110) of an environment controller (100), the execution of the instructions by the processing unit (110) of the environment controller (100) providing for improving predictive models of a neural network used for controlling a temperature in an area by:
storing a first predictive model comprising first set of weights of a neural network and a second predictive model comprising a second set of weights of a neural network in a memory (120) of the environment controller (505, 100);
determining by the processing unit (110) of the environment controller (100) a plurality of consecutive temperature measurements in the area (510);
determining by the processing unit (110) of the environment controller (100) a plurality of consecutive humidity level measurements in the area (515);
executing by the processing unit (110) of the environment controller (100) a neural network inference engine using the first set of weights of the first predictive model for inferring a temperature increase value based on inputs, the inputs comprising the plurality of consecutive temperature measurements and the plurality of consecutive humidity level measurements (520);
executing by the processing unit (110) of the environment controller (100) the neural network inference engine using the second set of weights of the second predictive model for inferring a temperature decrease value based on the inputs (525);
calculating by the processing unit (110) of the environment controller (100) a temperature adjustment value based on the temperature increase value and the temperature decrease value (530);
transmitting by the processing unit (110) of the environment controller (100) at least one command to at least one controlled appliance for adjusting the temperature in the area according to the temperature adjustment value (535);
receiving by the processing unit (110) of the environment controller (100) a user preference related to the temperature in the area, the user preference being transmitted by a user device (400, 545);
determining by the processing unit (110) of the environment controller (100) based on the received user preference a value of a first reinforcement signal and a value of a second reinforcement signal (550);
executing by the processing unit (110) of the environment controller (100) a neural network training engine (114) implementing reinforcement training to update the first set of weights of the first predictive model based on the inputs, the temperature increase value and the value of the first reinforcement signal (555);
executing by the processing unit (110) of the environment controller (100) the neural network training engine (114) implementing reinforcement training to update the second set of weights of the second predictive model based on the inputs, the temperature decrease value and the value of the second reinforcement signal (560); and
storing the updated first and second sets of weights of the respective first and second predictive models in the memory of the environment controller.

10. An environment controller (100) for improving predictive models of a neural network used for controlling a temperature in an area, the environment controller (100) comprising:
at least one communication interface;
memory for storing a first predictive model comprising a first set of weights of a neural network and a second predictive model comprising a second set of weights of a neural network; and
a processing unit (110) specially adapted for:
determining a plurality of consecutive temperature measurements in the area;
determining a plurality of consecutive humidity level measurements in the area;
executing a neural network inference engine using the first set of weights of the first predictive model for inferring a temperature increase value based on inputs, the inputs comprising the plurality of consecutive temperature measurements and the plurality of consecutive humidity level measurements;
executing the neural network inference engine using the second set of weights of the second predictive model for inferring a temperature decrease value based on the inputs;
calculating a temperature adjustment value based on the temperature increase value and the temperature decrease value;
transmitting via the at least one communication interface at least one command to at least one controlled appliance for adjusting the temperature in the area according to the temperature adjustment value;
receiving via the at least one communication interface a user preference related to the temperature in the area, the user preference being transmitted by a user device;
determining based on the received user preference a value of a first reinforcement signal and a value of a second reinforcement signal;
executing a neural network training engine implementing reinforcement training to update the first set of weights of the first predictive model based on the inputs, the temperature increase value and the value of the first reinforcement signal;
executing the neural network training engine implementing reinforcement training to update the second set of weights of the second predictive model based on the inputs, the temperature decrease value and the value of the second reinforcement signal; and
storing the updated first and second sets of weights of the respective first and second predictive models in the memory.

11. The environment controller (100) of claim 10, wherein the area is located in a building.

12. The environment controller (100) of claim 10, wherein the processing unit (110) further is adapted for determining at least one of a temperature measurement outside the area, a humidity level measurement outside the area, a plurality of consecutive carbon dioxide (CO2) level measurements in the area, and a period of time; and the inputs further comprise the at least one of the temperature measurement outside the area, the humidity level measurement outside the area, the plurality of consecutive CO2 level measurements in the area, and the period of time.

13. The environment controller (100) of claim 10, wherein the calculation of the temperature adjustment value based on the temperature increase value and the temperature decrease value consists of one of the following: the temperature adjustment value is the difference between the temperature increase value and the temperature decrease value; and the absolute value of the temperature adjustment value is the greatest of the temperature increase value and the temperature decrease value, and the sign of the temperature adjustment value is positive if the greatest is the temperature increase value, and negative otherwise.

14. The environment controller (100) of claim 10, wherein a plurality of user preferences is received, a corresponding plurality of values of the first and second reinforcement signals is determined, and a corresponding plurality of executions of the neural network training engine is performed for generating the updated first and second sets of weights of the respective first and second predictive models.

15. The environment controller (100) of claim 10, wherein if no user preference is received after a period of time corresponding to a pre-defined duration, then values of the first and second reinforcement signals consisting of positive rewards are determined and the neural network training engine is executed for updating the first and second sets of weights of the respective first and second predictive models using the determined values of the first and second reinforcement signals.

16. The environment controller (100) of claim 10, wherein each user preference is selected among a pre-defined set of user preferences.

17. The environment controller (100) of claim 10, wherein the value of the first reinforcement signal is a positive reward and the value of the second reinforcement signal is a negative reward, or the value of the first reinforcement signal is a negative reward and the value of the second reinforcement signal is a positive reward.

## Patentansprüche

1. Verfahren zum Verbessern von Vorhersagemodellen eines neuronalen Netzes, das zum Überwachen einer Temperatur in einem Bereich verwendet wird, wobei das Verfahren umfasst:
- Speichern eines ersten Vorhersagemodells, das einen ersten Satz von Gewichten eines neuronalen Netzes umfasst, und eines zweiten Vorhersagemodells, das einen zweiten Satz von Gewichten eines neuronalen Netzes umfasst, in einem Speicher (120) einer Umgebungsüberwachungseinrichtung (505, 100);
- Ermitteln einer Mehrzahl von aufeinanderfolgenden Temperaturmessungen in dem Bereich (510) durch eine Verarbeitungseinheit (110) der Umgebungsüberwachungseinrichtung (100);
- Ermitteln einer Mehrzahl von aufeinanderfolgenden Messungen des Feuchtigkeitsniveaus in dem Bereich (515) durch die Verarbeitungseinheit (110) der Umgebungsüberwachungseinrichtung (100);
- Ausführen einer Inferenzmaschine des neuronalen Netzes (112) durch die Verarbeitungseinheit (110) der Umgebungsüberwachungseinrichtung (100) unter Verwendung des ersten Satzes von Gewichten des ersten Vorhersagemodells zum Deduzieren eines Temperaturerhöhungswertes auf der Grundlage von Eingangssignale, wobei die Eingangssignalen die Mehrzahl von aufeinanderfolgenden Temperaturmessungen und die Mehrzahl von aufeinanderfolgenden Feuchtigkeitspegelmessungen (520) umfassen;
- Ausführen der Inferenzmaschine des neuronalen Netzes (112) durch die Verarbeitungseinheit (110) der Umgebungsüberwachungseinrichtung (100) unter Verwendung des zweiten Satzes von Gewichten des zweiten Vorhersagemodells zum Deduzieren eines Temperaturabnahmewerts auf der Grundlage der Eingangssignale (525);
- Berechnen eines Temperaturanpassungswertes auf der Grundlage des Temperaturerhöhungswertes und des Temperaturabsenkungswertes (530) durch die Verarbeitungseinheit (110) der Umgebungsüberwachungseinrichtung (100);
- Übertragen zumindest eines Befehls durch die Verarbeitungseinheit (110) der Umgebungsüberwachungseinrichtung (100) an zumindest ein überwachtes Gerät zum Einstellen der Temperatur in dem Bereich gemäß dem Temperaturanpassungswert (535);
- Empfangen einer Nutzerpräferenz in Bezug auf die Temperatur in dem Bereich durch die Verarbeitungseinheit (110) der Umgebungsüberwachungseinrichtung (100), wobei die Nutzerpräferenz von einem Nutzergerät (400, 545) übertragen wird;
- Ermitteln eines Wertes eines ersten Verstärkungssignals und eines Wertes eines zweiten Verstärkungssignals (550) durch die Verarbeitungseinheit (110) der Umgebungsüberwachungseinrichtung (100) basierend auf der empfangenen Nutzerpräferenz;
- Ausführen einer Trainingsmaschine (114) des neuronalen Netzes durch die Verarbeitungseinheit (110) der Umgebungsüberwachungseinrichtung (100), die ein Verstärkungstraining implementiert, um den ersten Satz von Gewichten des ersten Vorhersagemodells basierend auf den Eingangssignalen, dem Temperaturerhöhungswert und dem Wert des ersten Verstärkungssignals (555) zu aktualisieren;
- Ausführen der Trainingsmaschine (114) des neuronalen Netzes, die Verstärkungstraining implementiert, durch die Verarbeitungseinheit (110) der Umgebungsüberwachungseinrichtung (100), um den zweiten Satz von Gewichten des zweiten Vorhersagemodells basierend auf den Eingangssignalen, dem Temperaturabfallwert und dem Wert des zweiten Verstärkungssignals (560) zu aktualisieren; und
- Speichern der aktualisierten ersten und zweiten Sätze von Gewichten der jeweiligen ersten und zweiten Vorhersagemodelle in dem Speicher (120) der Umgebungsüberwachungseinrichtung (565, 100).

2. Verfahren nach Anspruch 1, wobei sich der Bereich in einem Gebäude befindet.

3. Verfahren nach Anspruch 1, wobei die Verarbeitungseinheit (110) der Umgebungsüberwachungseinrichtung (100) ferner zumindest eine Temperaturmessung außerhalb des Bereichs, eine Feuchtigkeitspegelmessung außerhalb des Bereichs, eine Mehrzahl von aufeinanderfolgenden CO2-Pegelmessungen in dem Bereich und eine Zeitspanne bestimmt; und die Eingangssignale ferner die Temperaturmessung außerhalb des Bereichs, die Feuchtigkeitspegelmessung außerhalb des Bereichs, die Mehrzahl von aufeinanderfolgenden CO2-Pegelmessungen in dem Bereich und/oder die Zeitspanne umfassen.

4. Verfahren nach Anspruch 1, wobei die Berechnung des Temperaturanpassungswerts auf der Grundlage des Temperaturerhöhungswerts und des Temperaturabsenkungswerts aus einem von Folgendem besteht: der Temperaturanpassungswert ist die Differenz zwischen dem Temperaturerhöhungswert und dem Temperaturabsenkungswert; und der Absolutwert des Temperaturanpassungswerts ist der größte Wert des Temperaturerhöhungswerts und des Temperaturabsenkungswerts, und das Vorzeichen des Temperaturanpassungswerts ist positiv, falls der größte Wert der Temperaturerhöhungswert ist, und ansonsten negativ.

5. Verfahren nach Anspruch 1, wobei eine Mehrzahl von Nutzerpräferenzen empfangen wird, eine entsprechende Mehrzahl von Werten der ersten und zweiten Verstärkungssignale bestimmt wird, und eine entsprechende Mehrzahl von Ausführungen der Trainingsmaschine (114) des neuronalen Netzes durchgeführt wird, um die aktualisierten ersten und zweiten Sätze von Gewichten der jeweiligen ersten und zweiten Vorhersagemodelle zu erzeugen.

6. Verfahren nach Anspruch 1, wobei, wenn nach einer Zeitspanne, die einer vordefinierten Dauer entspricht, keine Nutzerpräferenz empfangen wird, dann Werte der ersten und zweiten Verstärkungssignale, die aus positiven Belohnungen bestehen, bestimmt werden und die Trainingsmaschine (114) des neuronalen Netzes ausgeführt wird, um die ersten und zweiten Sätze von Gewichten der jeweiligen ersten und zweiten Vorhersagemodelle unter Verwendung der bestimmten Werte der ersten und zweiten Verstärkungssignale zu aktualisieren.

7. Verfahren nach Anspruch 1, wobei jede Nutzerpräferenz aus einem vordefinierten Satz von Nutzerpräferenzen ausgewählt wird.

8. Verfahren nach Anspruch 1, wobei der Wert des ersten Verstärkungssignals eine positive Belohnung ist und der Wert des zweiten Verstärkungssignals eine negative Belohnung ist, oder der Wert des ersten Verstärkungssignals eine negative Belohnung ist und der Wert des zweiten Verstärkungssignals eine positive Belohnung ist.

9. Nicht-transitorisches Computerprogrammprodukt, das Anweisungen umfasst, die von einer Verarbeitungseinheit (110) einer Umgebungsüberwachungseinrichtung (100) ausgeführt werden können, wobei die Ausführung der Anweisungen durch die Verarbeitungseinheit (110) der Umgebungsüberwachungseinrichtung (100) für die Verbesserung von Vorhersagemodellen eines neuronalen Netzes sorgt, das zur Überwachung einer Temperatur in einem Bereich verwendet wird, durch:
- Speichern eines ersten Vorhersagemodells, das einen ersten Satz von Gewichten eines neuronalen Netzes umfasst, und eines zweiten Vorhersagemodells, das einen zweiten Satz von Gewichten eines neuronalen Netzes umfasst, in einem Speicher (120) der Umgebungsüberwachungseinrichtung (505, 100);
- Ermitteln einer Mehrzahl von aufeinanderfolgenden Temperaturmessungen in dem Bereich (510) durch die Verarbeitungseinheit (110) der Umgebungsüberwachungseinrichtung (100);
- Ermitteln einer Mehrzahl von aufeinanderfolgenden Messungen des Feuchtigkeitsniveaus in dem Bereich (515) durch die Verarbeitungseinheit (110) der Umgebungsüberwachungseinrichtung (100);
- Ausführen durch die Verarbeitungseinheit (110) der Umgebungsüberwachungseinrichtung (100) einer Inferenzmaschine des neuronalen Netzes unter Verwendung des ersten Satzes von Gewichten des ersten Vorhersagemodells zum Deduzieren eines Temperaturerhöhungswertes auf der Grundlage von Eingangssignale, wobei die Eingangssignale die Mehrzahl von aufeinanderfolgenden Temperaturmessungen und die Mehrzahl von aufeinanderfolgenden Feuchtigkeitspegelmessungen (520) umfassen;
- Ausführen der Inferenzmaschine des neuronalen Netzes durch die Verarbeitungseinheit (110) der Umgebungsüberwachungseinrichtung (100) unter Verwendung des zweiten Satzes von Gewichten des zweiten Vorhersagemodells zum Deduzieren eines Temperaturabnahmewerts auf der Grundlage der Eingangssignale (525);
- Berechnen eines Temperaturanpassungswertes auf der Grundlage des Temperaturerhöhungswertes und des Temperaturabsenkungswertes (530) durch die Verarbeitungseinheit (110) der Umgebungsüberwachungseinrichtung (100);
- Übertragen zumindest eines Befehls durch die Verarbeitungseinheit (110) der Umgebungsüberwachungseinrichtung (100) an zumindest ein überwachtes Gerät zum Einstellen der Temperatur in dem Bereich gemäß dem Temperaturanpassungswert (535);
- Empfangen einer Nutzerpräferenz in Bezug auf die Temperatur in dem Bereich durch die Verarbeitungseinheit (110) der Umgebungsüberwachungseinrichtung (100), wobei die Nutzerpräferenz von einem Nutzergerät (400, 545) übertragen wird;
- Ermitteln eines Wertes eines ersten Verstärkungssignals und eines Wertes eines zweiten Verstärkungssignals (550) durch die Verarbeitungseinheit (110) der Umgebungsüberwachungseinrichtung (100) basierend auf der empfangenen Nutzerpräferenz;
Ausführen einer Trainingsmaschine (114) des neuronalen Netzes durch die Verarbeitungseinheit (110) der Umgebungsüberwachungseinrichtung (100), die ein Verstärkungstraining implementiert, um den ersten Satz von Gewichten des ersten Vorhersagemodells basierend auf den Eingangssignalen, dem Temperaturerhöhungswert und dem Wert des ersten Verstärkungssignals (555) zu aktualisieren;
- Ausführen der Trainingsmaschine (114) des neuronalen Netzes, die Verstärkungstraining implementiert, durch die Verarbeitungseinheit (110) der Umgebungsüberwachungseinrichtung (100), um den zweiten Satz von Gewichten des zweiten Vorhersagemodells basierend auf den Eingangssignalen, dem Temperaturabfallwert und dem Wert des zweiten Verstärkungssignals (560) zu aktualisieren; und
- Speichern der aktualisierten ersten und zweiten Sätze von Gewichten der jeweiligen ersten und zweiten Vorhersagemodelle in dem Speicher der Umgebungsüberwachungseinrichtung.

10. Umgebungsüberwachungseinrichtung (100) zum Verbessern von Vorhersagemodellen eines neuronalen Netzes, das zum Überwachen einer Temperatur in einem Bereich verwendet wird, wobei die Umgebungsüberwachungseinrichtung (100) umfasst:
- zumindest eine Kommunikationsschnittstelle;
- einen Speicher zum Speichern eines ersten Vorhersagemodells, das einen ersten Satz von Gewichten eines neuronalen Netzes umfasst, und eines zweiten Vorhersagemodells, das einen zweiten Satz von Gewichten eines neuronalen Netzes umfasst; und
- eine Verarbeitungseinheit (110), die insbesondere ausgebildet ist für:
- Ermitteln einer Mehrzahl von aufeinanderfolgenden Temperaturmessungen in dem Gebiet;
- Ermitteln einer Mehrzahl von aufeinanderfolgenden Feuchtigkeitsmessungen in dem Gebiet;
- Ausführen einer Inferenzmaschine des neuronalen Netzes unter Verwendung des ersten Satzes von Gewichten des ersten Vorhersagemodells zum Deduzieren eines Temperaturerhöhungswertes auf der Grundlage von Eingangssignalen, wobei die Eingangssignale die Mehrzahl von aufeinanderfolgenden Temperaturmessungen und die Mehrzahl von aufeinanderfolgenden Feuchtigkeitspegelmessungen umfassen;
- Ausführen der Inferenzmaschine des neuronalen Netzes unter Verwendung des zweiten Satzes von Gewichten des zweiten Vorhersagemodells zum Deduzieren eines Temperaturabnahmewerts auf der Grundlage der Eingangssignale;
- Berechnen eines Temperaturanpassungswerts auf der Grundlage des Temperaturerhöhungswerts und des Temperaturabnahmewerts;
- Übertragen über die zumindest eine Kommunikationsschnittstelle zumindest eines Befehls an zumindest ein überwachtes Gerät zum Einstellen der Temperatur in dem Bereich gemäß dem Temperaturanpassungswert;
- Empfangen einer auf die Temperatur in dem Bereich bezogenen Nutzerpräferenz über die zumindest eine Kommunikationsschnittstelle, wobei die Nutzerpräferenz von einem Nutzergerät übertragen wird;
- Ermitteln eines Wertes eines ersten Verstärkungssignals und eines Wertes eines zweiten Verstärkungssignals auf der Grundlage der empfangenen Nutzerpräferenz;
- Ausführen einer Trainingsmaschine für ein neuronales Netz, die ein Verstärkungstraining implementiert, um den ersten Satz von Gewichten des ersten Vorhersagemodells auf der Grundlage der Eingangssignale, des Temperaturerhöhungswertes und des Wertes des ersten Verstärkungssignals zu aktualisieren;
- Ausführen der Trainingsmaschine für das neuronale Netz, die das Verstärkungstraining implementiert, um den zweiten Satz von Gewichten des zweiten Vorhersagemodells auf der Grundlage der Eingangssignale, des Temperaturabfallwertes und des Wertes des zweiten Verstärkungssignals zu aktualisieren; und
- Speichern der aktualisierten ersten und zweiten Sätze von Gewichten der jeweiligen ersten und zweiten Vorhersagemodelle in dem Speicher.

11. Umgebungsüberwachungseinrichtung (100) nach Anspruch 10, wobei sich der Bereich in einem Gebäude befindet.

12. Umgebungsüberwachungseinrichtung (100) nach Anspruch 10, wobei die Verarbeitungseinheit (110) ferner zum Ermitteln von zumindest einem von einer Temperaturmessung außerhalb des Bereichs, einer Feuchtigkeitspegelmessung außerhalb des Bereichs, einer Mehrzahl von aufeinanderfolgenden CO2-Pegelmessungen in dem Bereich und einer Zeitspanne ausgebildet ist; und die Eingangssignale ferner die zumindest eines von der Temperaturmessung außerhalb des Bereichs, der Feuchtigkeitspegelmessung außerhalb des Bereichs, der Mehrzahl von aufeinanderfolgenden CO2-Pegelmessungen in dem Bereich und der Zeitspanne umfassen.

13. Umgebungsüberwachungseinrichtung (100) nach Anspruch 10, wobei die Berechnung des Temperaturanpassungswerts auf der Grundlage des Temperaturerhöhungswerts und des Temperaturabnahmewerts aus einem von Folgendem besteht: der Temperaturanpassungswert ist die Differenz zwischen dem Temperaturerhöhungswert und dem Temperaturabnahmewert; und der Absolutwert des Temperaturanpassungswerts ist der größte Wert des Temperaturerhöhungswerts und des Temperaturabnahmewerts, und das Vorzeichen des Temperaturanpassungswerts ist positiv, wenn der größte Wert der Temperaturerhöhungswert ist, und ansonsten negativ.

14. Umgebungsüberwachungseinrichtung (100) nach Anspruch 10, wobei eine Mehrzahl von Nutzerpräferenzen empfangen wird, eine entsprechende Mehrzahl von Werten der ersten und zweiten Verstärkungssignale bestimmt wird, und eine entsprechende Mehrzahl von Ausführungen der Trainingsmaschine des neuronalen Netzes durchgeführt wird, um die aktualisierten ersten und zweiten Sätze von Gewichten der jeweiligen ersten und zweiten prädiktiven Modelle zu erzeugen.

15. Umgebungsüberwachungseinrichtung (100) nach Anspruch 10, wobei, wenn nach einer Zeitspanne, die einer vordefinierten Dauer entspricht, keine Nutzerpräferenz empfangen wird, dann Werte der ersten und zweiten Verstärkungssignale, die aus positiven Belohnungen bestehen, bestimmt werden und die neuronale Netztrainingsmaschine ausgeführt wird, um die ersten und zweiten Sätze von Gewichten der jeweiligen ersten und zweiten Vorhersagemodelle unter Verwendung der bestimmten Werte der ersten und zweiten Verstärkungssignale zu aktualisieren.

16. Umgebungsüberwachungseinrichtung (100) nach Anspruch 10, wobei jede Nutzerpräferenz aus einem vordefinierten Satz von Nutzerpräferenzen ausgewählt wird.

17. Umgebungsüberwachungseinrichtung (100) nach Anspruch 10, wobei der Wert des ersten Verstärkungssignals eine positive Belohnung ist und der Wert des zweiten Verstärkungssignals eine negative Belohnung ist, oder der Wert des ersten Verstärkungssignals eine negative Belohnung ist und der Wert des zweiten Verstärkungssignals eine positive Belohnung ist.

## Revendications

1. Procédé pour améliorer les modèles de prédiction d'un réseau neural qui est utilisé pour commander, contrôler et réguler une température dans une zone, le procédé comprenant :
le stockage d'un premier modèle de prédiction qui comprend un premier jeu de poids d'un réseau neural et d'un second modèle de prédiction qui comprend un second jeu de poids d'un réseau neural dans une mémoire (120) d'un contrôleur d'environnement (505, 100) ;
la détermination, par une unité de traitement (110) du contrôleur d'environnement (100), d'une pluralité de mesures de température consécutives dans la zone (510) ;
la détermination, par l'unité de traitement (110) du contrôleur d'environnement (100), d'une pluralité de mesures de niveau d'humidité consécutives dans la zone (515) ;
l'exécution, par l'unité de traitement (110) du contrôleur d'environnement (100), d'un moteur d'inférence de réseau neural (112) en utilisant le premier jeu de poids du premier modèle de prédiction pour déduire une valeur d'augmentation de température sur la base d'entrées, les entrées comprenant la pluralité de mesures de température consécutives et la pluralité de mesures de niveau d'humidité consécutives (520) ;
l'exécution, par l'unité de traitement (110) du contrôleur d'environnement (100), du moteur d'inférence de réseau neural (112) en utilisant le second jeu de poids du second modèle de prédiction pour déduire une valeur de diminution de température sur la base des entrées (525) ;
le calcul, par l'unité de traitement (110) du contrôleur d'environnement (100), d'une valeur de réglage de température sur la base de la valeur d'augmentation de température et de la valeur de diminution de température (530) ;
l'émission, par l'unité de traitement (110) du contrôleur d'environnement (100), d'au moins une commande sur au moins un appareil commandé, contrôlé et régulé pour régler la température dans la zone conformément à la valeur de réglage de température (535) ;
la réception, par l'unité de traitement (110) du contrôleur d'environnement (100), d'une préférence d'utilisateur qui est rapportée à la température dans la zone, la préférence d'utilisateur étant émise par un dispositif d'utilisateur (400, 545) ;
la détermination, par l'unité de traitement (110) du contrôleur d'environnement (100), sur la base de la préférence d'utilisateur reçue, d'une valeur d'un premier signal de renforcement et d'une valeur d'un second signal de renforcement (550) ;
l'exécution, par l'unité de traitement (110) du contrôleur d'environnement (100), d'un moteur d'entraînement de réseau neural (114) qui met en oeuvre un entraînement de renforcement pour mettre à jour le premier jeu de poids du premier modèle de prédiction sur la base des entrées, de la valeur d'augmentation de température et de la valeur du premier signal de renforcement (555) ;
l'exécution, par l'unité de traitement (110) du contrôleur d'environnement (100), du moteur d'entraînement de réseau neural (114) qui met en oeuvre un entraînement de renforcement pour mettre à jour le second jeu de poids du second modèle de prédiction sur la base des entrées, de la valeur de diminution de température et de la valeur du second signal de renforcement (560) ; et
le stockage des premier et second jeux de poids mis à jour des premier et second modèles de prédiction respectifs dans la mémoire (120) du contrôleur d'environnement (565, 100).

2. Procédé selon la revendication 1, dans lequel la zone est localisée dans un bâtiment.

3. Procédé selon la revendication 1, dans lequel l'unité de traitement (110) du contrôleur d'environnement (100) détermine en outre au moins une valeur/au moins des valeurs qui est/sont prise(s) parmi une mesure de température à l'extérieur de la zone, une mesure de niveau d'humidité à l'extérieur de la zone, une pluralité de mesures de niveau de dioxyde de carbone (CO2) consécutives dans la zone, et une période de temps ; et les entrées comprennent en outre au moins la valeur/au moins les valeurs d'une pluralité de valeurs qui est/sont prise(s) parmi la mesure de température à l'extérieur de la zone, la mesure de niveau d'humidité à l'extérieur de la zone, la pluralité de mesures de niveau de dioxyde de carbone (CO2) consécutives dans la zone, et la période de temps.

4. Procédé selon la revendication 1, dans lequel le calcul de la valeur de réglage de température sur la base de la valeur d'augmentation de température et de la valeur de diminution de température est constitué par l'un des processus de détermination qui suivent : la valeur de réglage de température est la différence entre la valeur d'augmentation de température et la valeur de diminution de température ; et la valeur absolue de la valeur de réglage de température est la plus grande valeur parmi la valeur d'augmentation de température et la valeur de diminution de température, et le signe de la valeur de réglage de température est positif si la plus grande valeur est la valeur d'augmentation de température, et est négatif sinon.

5. Procédé selon la revendication 1, dans lequel des préférences d'utilisateur d'une pluralité de préférences d'utilisateur sont reçues, des valeurs d'une pluralité correspondante de valeurs des premier et second signaux de renforcement sont déterminées, et des exécutions d'une pluralité correspondante d'exécutions du moteur d'entraînement de réseau neural (114) sont réalisées pour générer les premier et second jeux de poids mis à jour des premier et second modèles de prédiction respectifs.

6. Procédé selon la revendication 1, dans lequel, si aucune préférence d'utilisateur n'est reçue après une période de temps qui correspond à une durée prédéfinie, alors les valeurs des premier et second signaux de renforcement qui sont constituées par des récompenses en termes d'évolution positive sont déterminées et le moteur d'entraînement de réseau neural (114) est exécuté pour mettre à jour les premier et second jeux de poids des premier et second modèles de prédiction respectifs en utilisant les valeurs déterminées des premier et second signaux de renforcement.

7. Procédé selon la revendication 1, dans lequel chaque préférence d'utilisateur est sélectionnée parmi un jeu prédéfini de préférences d'utilisateur.

8. Procédé selon la revendication 1, dans lequel la valeur du premier signal de renforcement est une récompense en termes d'évolution positive et la valeur du second signal de renforcement est une récompense en termes d'évolution négative, ou la valeur du premier signal de renforcement est une récompense en termes d'évolution négative et la valeur du second signal de renforcement est une récompense en termes d'évolution positive.

9. Progiciel informatique non transitoire comprenant des instructions qui peuvent être exécutées par une unité de traitement (110) d'un contrôleur d'environnement (100), l'exécution des instructions par l'unité de traitement (110) du contrôleur d'environnement (100) assurant l'amélioration des modèles de prédiction d'un réseau neural qui est utilisé pour commander, contrôler et réguler une température dans une zone en réalisant les actions qui suivent :
le stockage d'un premier modèle de prédiction qui comprend un premier jeu de poids d'un réseau neural et d'un second modèle de prédiction qui comprend un second jeu de poids d'un réseau neural dans une mémoire (120) du contrôleur d'environnement (505, 100) ;
la détermination, par l'unité de traitement (110) du contrôleur d'environnement (100), d'une pluralité de mesures de température consécutives dans la zone (510) ;
la détermination, par l'unité de traitement (110) du contrôleur d'environnement (100), d'une pluralité de mesures de niveau d'humidité consécutives dans la zone (515) ;
l'exécution, par l'unité de traitement (110) du contrôleur d'environnement (100), d'un moteur d'inférence de réseau neural en utilisant le premier jeu de poids du premier modèle de prédiction pour déduire une valeur d'augmentation de température sur la base d'entrées, les entrées comprenant la pluralité de mesures de température consécutives et la pluralité de mesures de niveau d'humidité consécutives (520) ;
l'exécution, par l'unité de traitement (110) du contrôleur d'environnement (100), du moteur d'inférence de réseau neural en utilisant le second jeu de poids du second modèle de prédiction pour déduire une valeur de diminution de température sur la base des entrées (525) ;
le calcul, par l'unité de traitement (110) du contrôleur d'environnement (100), d'une valeur de réglage de température sur la base de la valeur d'augmentation de température et de la valeur de diminution de température (530) ;
l'émission, par l'unité de traitement (110) du contrôleur d'environnement (100), d'au moins une commande sur au moins un appareil commandé, contrôlé et régulé pour régler la température dans la zone conformément à la valeur de réglage de température (535) ;
la réception, par l'unité de traitement (110) du contrôleur d'environnement (100), d'une préférence d'utilisateur qui est rapportée à la température dans la zone, la préférence d'utilisateur étant émise par un dispositif d'utilisateur (400, 545) ;
la détermination, par l'unité de traitement (110) du contrôleur d'environnement (100), sur la base de la préférence d'utilisateur reçue, d'une valeur d'un premier signal de renforcement et d'une valeur d'un second signal de renforcement (550) ;
l'exécution, par l'unité de traitement (110) du contrôleur d'environnement (100), d'un moteur d'entraînement de réseau neural (114) qui met en oeuvre un entraînement de renforcement pour mettre à jour le premier jeu de poids du premier modèle de prédiction sur la base des entrées, de la valeur d'augmentation de température et de la valeur du premier signal de renforcement (555) ;
l'exécution, par l'unité de traitement (110) du contrôleur d'environnement (100), du moteur d'entraînement de réseau neural (114) qui met en oeuvre un entraînement de renforcement pour mettre à jour le second jeu de poids du second modèle de prédiction sur la base des entrées, de la valeur de diminution de température et de la valeur du second signal de renforcement (560) ; et
le stockage des premier et second jeux de poids mis à jour des premier et second modèles de prédiction respectifs dans la mémoire (120) du contrôleur d'environnement.

10. Contrôleur d'environnement (100) pour améliorer les modèles de prédiction d'un réseau neural qui est utilisé pour commander, contrôler et réguler une température dans une zone, le contrôleur d'environnement (100) comprenant :
au moins une interface de communication ;
une mémoire pour stocker un premier modèle de prédiction qui comprend un premier jeu de poids d'un réseau neural et un second modèle de prédiction qui comprend un second jeu de poids d'un réseau neural ; et
une unité de traitement (110) qui est adaptée de façon spécifique pour réaliser les actions qui suivent :
la détermination d'une pluralité de mesures de température consécutives dans la zone ;
la détermination d'une pluralité de mesures de niveau d'humidité consécutives dans la zone ;
l'exécution d'un moteur d'inférence de réseau neural en utilisant le premier jeu de poids du premier modèle de prédiction pour déduire une valeur d'augmentation de température sur la base d'entrées, les entrées comprenant la pluralité de mesures de température consécutives et la pluralité de mesures de niveau d'humidité consécutives ;
l'exécution du moteur d'inférence de réseau neural en utilisant le second jeu de poids du second modèle de prédiction pour déduire une valeur de diminution de température sur la base des entrées ;
le calcul d'une valeur de réglage de température sur la base de la valeur d'augmentation de température et de la valeur de diminution de température ;
l'émission, via l'au moins une interface de communication, d'au moins une commande sur au moins un appareil commandé, contrôlé et régulé pour régler la température dans la zone conformément à la valeur de réglage de température ;
la réception, via l'au moins une interface de communication, d'une préférence d'utilisateur qui est rapportée à la température dans la zone, la préférence d'utilisateur étant émise par un dispositif d'utilisateur ;
la détermination, sur la base de la préférence d'utilisateur reçue, d'une valeur d'un premier signal de renforcement et d'une valeur d'un second signal de renforcement ;
l'exécution d'un moteur d'entraînement de réseau neural qui met en œuvre un entraînement de renforcement pour mettre à jour le premier jeu de poids du premier modèle de prédiction sur la base des entrées, de la valeur d'augmentation de température et de la valeur du premier signal de renforcement ;
l'exécution du moteur d'entraînement de réseau neural qui met en oeuvre un entraînement de renforcement pour mettre à jour le second jeu de poids du second modèle de prédiction sur la base des entrées, de la valeur de diminution de température et de la valeur du second signal de renforcement ; et
le stockage des premier et second jeux de poids mis à jour des premier et second modèles de prédiction respectifs dans la mémoire.

11. Contrôleur d'environnement (100) selon la revendication 10, dans lequel la zone est localisée dans un bâtiment.

12. Contrôleur d'environnement (100) selon la revendication 10, dans lequel l'unité de traitement (110) est en outre adaptée pour déterminer au moins une valeur/au moins des valeurs qui est/sont prise(s) parmi une mesure de température à l'extérieur de la zone, une mesure de niveau d'humidité à l'extérieur de la zone, une pluralité de mesures de niveau de dioxyde de carbone (CO2) consécutives dans la zone, et une période de temps ; et les entrées comprennent en outre au moins la valeur/au moins les valeurs d'une pluralité de valeurs qui est/sont prise(s) parmi la mesure de température à l'extérieur de la zone, la mesure de niveau d'humidité à l'extérieur de la zone, la pluralité de mesures de niveau de dioxyde de carbone (CO2) consécutives dans la zone, et la période de temps.

13. Contrôleur d'environnement (100) selon la revendication 10, dans lequel le calcul de la valeur de réglage de température sur la base de la valeur d'augmentation de température et de la valeur de diminution de température est constitué par l'un des processus de détermination qui suivent : la valeur de réglage de température est la différence entre la valeur d'augmentation de température et la valeur de diminution de température ; et la valeur absolue de la valeur de réglage de température est la plus grande valeur parmi la valeur d'augmentation de température et la valeur de diminution de température, et le signe de la valeur de réglage de température est positif si la plus grande valeur est la valeur d'augmentation de température, et est négatif sinon.

14. Contrôleur d'environnement (100) selon la revendication 10, dans lequel des préférences d'utilisateur d'une pluralité de préférences d'utilisateur sont reçues, des valeurs d'une pluralité correspondante de valeurs des premier et second signaux de renforcement sont déterminées, et des exécutions d'une pluralité correspondante d'exécutions du moteur d'entraînement de réseau neural sont réalisées pour générer les premier et second jeux de poids mis à jour des premier et second modèles de prédiction respectifs.

15. Contrôleur d'environnement (100) selon la revendication 10, dans lequel, si aucune préférence d'utilisateur n'est reçue après une période de temps qui correspond à une durée prédéfinie, alors les valeurs des premier et second signaux de renforcement qui sont constituées par des récompenses en termes d'évolution positive sont déterminées et le moteur d'entraînement de réseau neural est exécuté pour mettre à jour les premier et second jeux de poids des premier et second modèles de prédiction respectifs en utilisant les valeurs déterminées des premier et second signaux de renforcement.

16. Contrôleur d'environnement (100) selon la revendication 10, dans lequel chaque préférence d'utilisateur est sélectionnée parmi un jeu prédéfini de préférences d'utilisateur.

17. Contrôleur d'environnement (100) selon la revendication 10, dans lequel la valeur du premier signal de renforcement est une récompense en termes d'évolution positive et la valeur du second signal de renforcement est une récompense en termes d'évolution négative, ou la valeur du premier signal de renforcement est une récompense en termes d'évolution négative et la valeur du second signal de renforcement est une récompense en termes d'évolution positive.
